# EUROPEAN PATENT SPECIFICATION

(11) **EP 3 625 793 B1**
(45) Date of publication and mention of the grant of the patent: **30.03.2022**
(21) Application number: 18723287.1
(22) Date of filing: 23.04.2018
(51) Int. Cl.: G10L 15/18

(54) **HIERARCHICAL BELIEF STATES FOR DIGITAL ASSISTANTS**
HIERARCHISCHE GLAUBENSZUSTÄNDE FÜR DIGITALE ASSISTENTEN
ÉTATS DE CROYANCE HIÉRARCHISÉS POUR ASSISTANTS NUMÉRIQUES

(30) Priority: 15.05.2017 US 201762506455 P; 01.06.2017 DK PA201770432; 15.08.2017 US 201715678065
(43) Date of publication of application: 25.03.2020
(73) Proprietor: Apple Inc., Cupertino, CA 95014 (US)
(72) Inventor: THOMSON, Blaise, Cupertino, California 95014 (US); JOHANNSEN, Anders, Cupertino, California 95014 (US); Ó SÉAGHDHA, Diarmuid, Cupertino, California 95014 (US); FLEGO, Federico, Cupertino, California 95014 (US); SIMONELLI, Luca, Cupertino, California 95014 (US); YOUNG, Stephen J., Cupertino, California 95014 (US); VOICE, Thomas David, Cupertino, California 95014 (US); HELGASON, Thorvaldur Pall, Cupertino, California 95014 (US)
(74) Representative: Zacco Denmark A/S
(86) International application number: PCT/US2018/028943
(87) International publication number: WO 2018/212938

(56) References cited:
- US-A1- 2012 053 945
- US-A1- 2014 361 973

## Description

### CROSS-REFERENCE TO RELATED APPLICATIONS

This application claims priority to U.S. Application Serial No. 62/506,455, entitled "HIERARCHICAL BELIEF STATES FOR DIGITAL ASSISTANTS," filed on May 15, 2017; Danish Application No. PA201770432, entitled "HIERARCHICAL BELIEF STATES FOR DIGITAL ASSISTANTS," filed on June 1, 2017; and U.S. Application Serial No. 15/678,065, entitled "HIERARCHICAL BELIEF STATES FOR DIGITAL ASSISTANTS, filed on August 15,2017.

### FIELD

This relates generally to digital assistants and, more specifically, to hierarchical belief states for digital assistants.

### BACKGROUND

Intelligent automated assistants (or digital assistants) can provide a beneficial interface between human users and electronic devices. Such assistants can allow users to interact with devices or systems using natural language in spoken and/or text forms. For example, a user can provide an utterance containing a user request to a digital assistant operating on an electronic device. The digital assistant can interpret the user's intent from the utterance and operationalize the user's intent into tasks. The tasks can then be performed by executing one or more services of the electronic device, and a relevant output responsive to the user request can be returned to the user. In US 2012/05394 A1 relates to belief tracking and action selection in spoken dialog systems and US 2014/361943 A1 relates to a system and method for multimodal human-vehicle interaction and belief tracking.

### SUMMARY

The invention provides a method according to claim 1, a computer-readable storage medium according to claim 20 and an electronic device according to claim 21.

The principles underlying the invention involve the following steps: a user utterance of a dialogue is received. Based on one or more text representations of the user utterance, one or more user intents corresponding to the user utterance are determined. A belief state for the dialogue is determined. The belief state comprises a plurality of dialogue slots. Each dialogue slot of the plurality of dialogue slots includes a respective marginal certainty for a concept or property represented by the respective dialogue slot. A first dialogue slot of the plurality of dialogue slots further includes one or more joint certainties for one or more interpretations arising from the first dialogue slot. Based on the marginal certainty of each dialogue slot of the plurality of dialogue slots and the one or more joint certainties of the first dialogue slot, a policy action is selected from a plurality of candidate policy actions that correspond to the belief state. The selected policy action is performed including outputting results of the policy action for presentation.

Having both marginal certainties for each dialogue slot as well as joint certainties for groups of related dialogue slots in the belief state can enable accurate and robust decision making for responding to complex requests while maintaining tractability and computational efficiency. In particular, this approach avoids having to maintain a comprehensive list of candidate user intents and their associated certainties, which reduces the size of the belief state and enables computation of the belief state and the policy action to be more tractable. At the same time, the joint certainty information contained in the belief state for concepts or properties that interact in a joint manner can better inform the selection of appropriate policy actions. As a result, the operability of the electronic device can be enhanced by allowing for better interpretation of speech and other forms of natural language input. Specifically, the electronic device can be able to operate with greater accuracy and reliability while maintaining tractability and computational efficiency when identifying and performing tasks in response to user requests.

### BRIEF DESCRIPTION OF THE DRAWINGS

FIG. 1 is a block diagram illustrating a system and environment for implementing a digital assistant, according to various examples.
FIG. 2A is a block diagram illustrating a portable multifunction device implementing the client-side portion of a digital assistant, according to various examples.
FIG. 2B is a block diagram illustrating exemplary components for event handling, according to various examples.
FIG. 3 illustrates a portable multifunction device implementing the client-side portion of a digital assistant, according to various examples.
FIG. 4 is a block diagram of an exemplary multifunction device with a display and a touch-sensitive surface, according to various examples.
FIG. 5A illustrates an exemplary user interface for a menu of applications on a portable multifunction device, according to various examples.
FIG. 5B illustrates an exemplary user interface for a multifunction device with a touch-sensitive surface that is separate from the display, according to various examples.
FIG. 6A illustrates a personal electronic device, according to various examples.
FIG. 6B is a block diagram illustrating a personal electronic device, according to various examples.
FIG. 7A is a block diagram illustrating a digital assistant system or a server portion thereof, according to various examples.
FIG. 7B illustrates the functions of the digital assistant shown in FIG. 7A, according to various examples.
FIG. 7C illustrates a portion of an ontology, according to various examples.
FIG. 8 illustrates a portion of a belief state, according to various examples.
FIG. 9 illustrates a portion of an updated belief state, according to various examples.
FIG. 10 illustrates a portion of an updated belief state, according to various examples.
FIG. 11 illustrates a portion of an updated belief state, according to various examples.
FIG. 12 illustrates a process for operating a digital assistant using hierarchical belief states, according to various examples.

### DETAILED DESCRIPTION

In the following description of examples, reference is made to the accompanying drawings in which are shown by way of illustration specific examples that can be practiced. It is to be understood that other examples can be used and structural changes can be made without departing from the scope of the various examples.

Hierarchical belief states can be used to represent and maintain the state of a conversation between a user and the digital assistant. In particular, hierarchical belief states can enable robust handling of errors from speech recognition and natural language processing as well as effective decision making for system responses. In addition, hierarchical belief states can support complex natural language requests from the user. In one approach, the hierarchical belief state can maintain a comprehensive list of candidate user intents and the associated joint certainties (e.g., joint probabilities) for each candidate user intent. For example, given the user request "I want a meeting for two days from the 23^{rd}," the hierarchical belief state can include the candidate user intents of: (1) creating a calendar event for the day of the 25^{th}, (2) creating a calendar event for the day of the 23^{rd} and for a duration of two days, (3) searching for a calendar event on the day of the 25^{th}, (4) searching for a calendar event on the day of the 23^{rd} and having a duration of two days. In this example, the hierarchical belief state would maintain joint certainties for each of the four candidate user intents. Although this approach can be desirable for accounting for relevant joint relationships between concepts and/or properties (e.g., between "day" and "duration"), one problem is that it does not scale when the number of candidate user intents being maintained becomes large. In particular, computations of the hierarchical belief state and policy actions can become intractable when the number of candidate user intents becomes large.

According to the intention, the individual concepts and/or properties of the candidate user intents are tracked independently in the hierarchical belief state. Specifically, the hierarchical belief state includes a plurality of dialogue slots that each represent a respective concept or property of the candidate user intents. Each dialogue slot maintains a marginal certainty (e.g., marginal probability or marginal expectation) for the respective concept or property represented by the dialogue slot. The joint certainty associated with a particular candidate user intent can then be determined based on the product of the marginal probabilities for the relevant dialogue slots. For instance, returning to the example user request "I want a meeting for two days from the 23^{rd}," the corresponding candidate user intents include the concepts of "calendar," "event," "create," and "search" and the properties of "day" and "duration." In this example, each of these concepts and properties is represented by a respective dialogue slot in the hierarchical belief state. In addition, each dialogue slot would maintain a marginal certainty for the respective concept or property represented by the respective dialogue slot. Thus, for the candidate user intent of creating a calendar event for the day of the 25^{th}, the associated joint certainty is determined based on the product of the marginal certainties for the dialogue slots that represent the "calendar," "event," and "create" concepts and the "day" property. Because the certainties are maintained at the dialogue slot level rather than for all candidate user intents, this approach can be more scalable and tractable. However, this approach does not maintain joint certainty information for concepts or properties that interact in a joint manner. Thus, in this approach, decision making (e.g., selection of policy actions) may not be informed by possible joint interactions between related concepts or properties. As a result, this approach can suffer from lower accuracy and robustness for more complex user requests.

In accordance with some techniques described herein, a hierarchical belief state that enables accurate and robust decision making for responding to complex user requests while maintaining tractability and computational efficiency is provided. According to the invention, it is provided a process for operating a digital assistant using such a hierarchical belief state, a user utterance of a dialogue is received. Based on one or more text representations of the user utterance, one or more user intents corresponding to the user utterance are determined. A belief state for the dialogue is determined. The belief state comprises a plurality of dialogue slots. Each dialogue slot of the plurality of dialogue slots includes a respective marginal certainty for a concept or property represented by the respective dialogue slot. A first dialogue slot of the plurality of dialogue slots further includes one or more joint certainties for one or more interpretations arising from the first dialogue slot. Based on the marginal certainty of each dialogue slot of the plurality of dialogue slots and the one or more joint certainties of the first dialogue slot, a policy action is selected from a plurality of candidate policy actions that correspond to the belief state. The selected policy action is performed including outputting results of the policy action for presentation.

Although the following description uses terms "first," "second," etc. to describe various elements, these elements should not be limited by the terms. These terms are only used to distinguish one element from another. For example, a first input could be termed a second input, and, similarly, a second input could be termed a first input, without departing from the scope of the various described examples. The first input and the second input are both inputs and, in some cases, are separate and different inputs.

The terminology used in the description of the various described examples herein is for the purpose of describing particular examples only and is not intended to be limiting. As used in the description of the various described examples and the appended claims, the singular forms "a," "an," and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

The term "if' may be construed to mean "when" or "upon" or "in response to determining" or "in response to detecting," depending on the context. Similarly, the phrase "if it is determined" or "if [a stated condition or event] is detected" may be construed to mean "upon determining" or "in response to determining" or "upon detecting [the stated condition or event]" or "in response to detecting [the stated condition or event]," depending on the context.

### 1. System and Environment

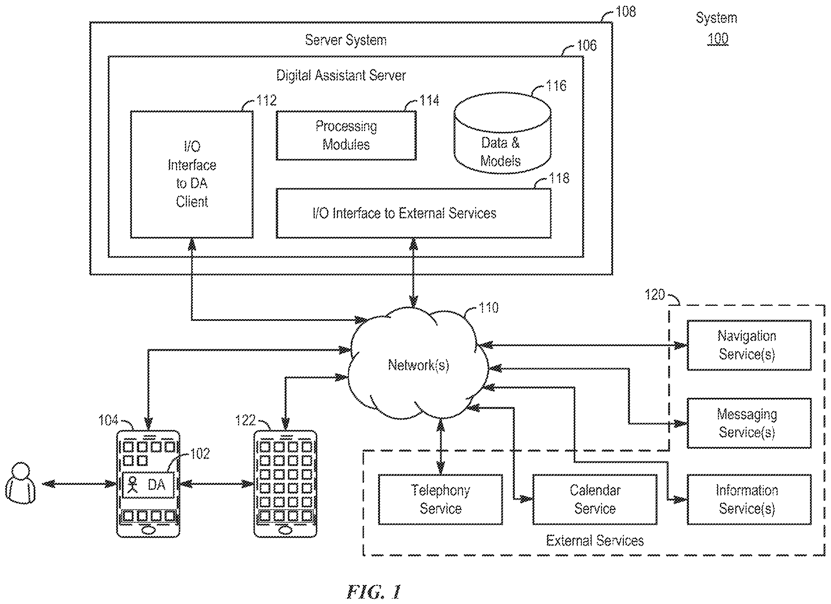

The following description illustrates suitable systems for performing the invention. The examples and embodiments disclosed therein are useful for understanding the general context of application and underlying concepts of the invention, but not showing a disclosure of the invention covered by the claims which will be later more explicitly described. FIG. 1 illustrates a block diagram of system 100 according to various examples. In some examples, system 100 implements a digital assistant. The terms "digital assistant," "virtual assistant," "intelligent automated assistant," or "automatic digital assistant" refer to any information processing system that interprets natural language input in spoken and/or textual form to infer user intent, and performs actions based on the inferred user intent. For example, to act on an inferred user intent, the system performs one or more of the following: identifying a task flow with steps and parameters designed to accomplish the inferred user intent, inputting specific requirements from the inferred user intent into the task flow; executing the task flow by invoking programs, methods, services, APIs, or the like; and generating output responses to the user in an audible (e.g., speech) and/or visual form.

Specifically, a digital assistant is capable of accepting a user request at least partially in the form of a natural language command, request, statement, narrative, and/or inquiry. Typically, the user request seeks either an informational answer or performance of a task by the digital assistant. A satisfactory response to the user request includes a provision of the requested informational answer, a performance of the requested task, or a combination of the two. For example, a user asks the digital assistant a question, such as "Where am I right now?" Based on the user's current location, the digital assistant answers, "You are in Central Park near the west gate." The user also requests the performance of a task, for example, "Please invite my friends to my girlfriend's birthday party next week." In response, the digital assistant can acknowledge the request by saying "Yes, right away," and then send a suitable calendar invite on behalf of the user to each of the user's friends listed in the user's electronic address book. During performance of a requested task, the digital assistant sometimes interacts with the user in a continuous dialogue involving multiple exchanges of information over an extended period of time. There are numerous other ways of interacting with a digital assistant to request information or performance of various tasks. In addition to providing verbal responses and taking programmed actions, the digital assistant also provides responses in other visual or audio forms, e.g., as text, alerts, music, videos, animations, etc.

As shown in FIG. 1, in some examples, a digital assistant is implemented according to a client-server model. The digital assistant includes client-side portion 102 (hereafter "DA client 102") executed on user device 104 and server-side portion 106 (hereafter "DA server 106") executed on server system 108. DA client 102 communicates with DA server 106 through one or more networks 110. DA client 102 provides client-side functionalities such as user-facing input and output processing and communication with DA server 106. DA server 106 provides server-side functionalities for any number of DA clients 102 each residing on a respective user device 104.

In some examples, DA server 106 includes client-facing I/O interface 112, one or more processing modules 114, data and models 116, and I/O interface to external services 118. The client-facing I/O interface 112 facilitates the client-facing input and output processing for DA server 106. One or more processing modules 114 utilize data and models 116 to process speech input and determine the user's intent based on natural language input. Further, one or more processing modules 114 perform task execution based on inferred user intent. In some examples, DA server 106 communicates with external services 120 through network(s) 110 for task completion or information acquisition. I/O interface to external services 118 facilitates such communications.

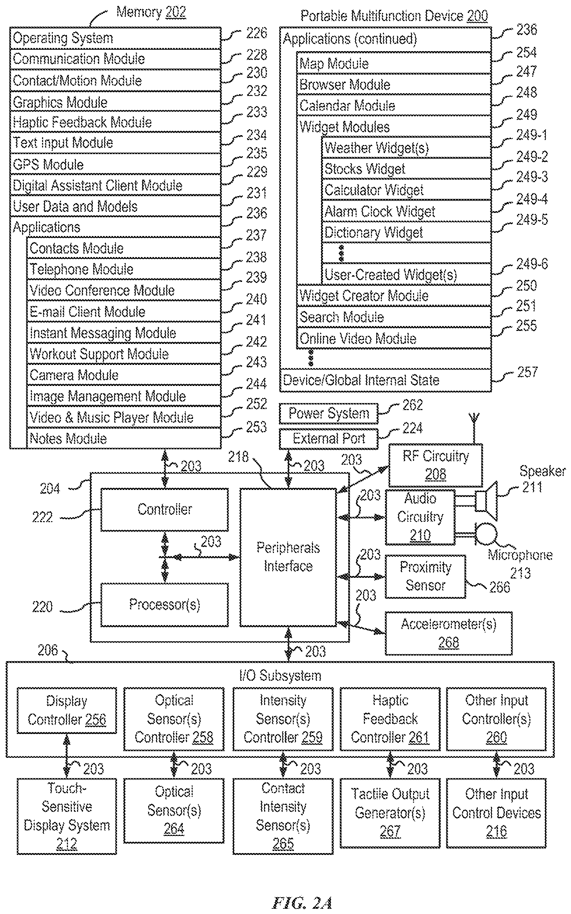

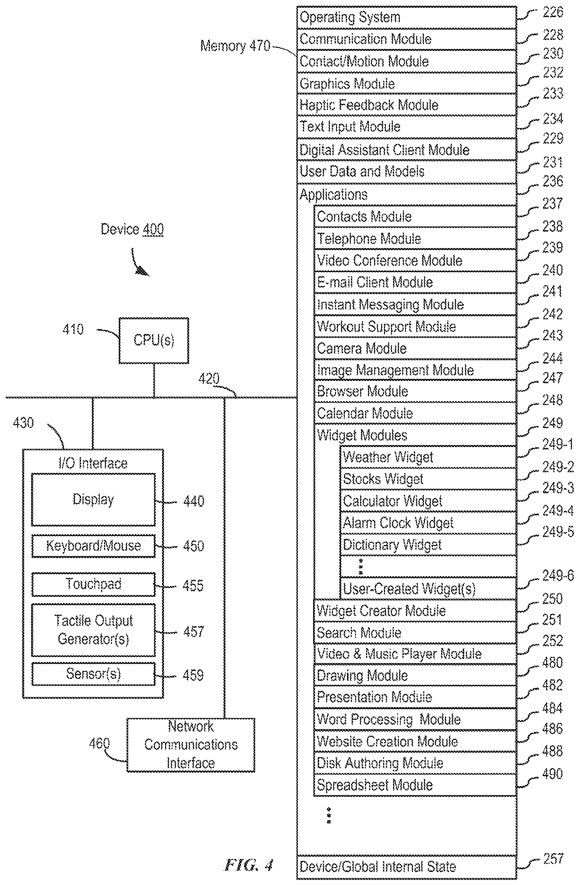

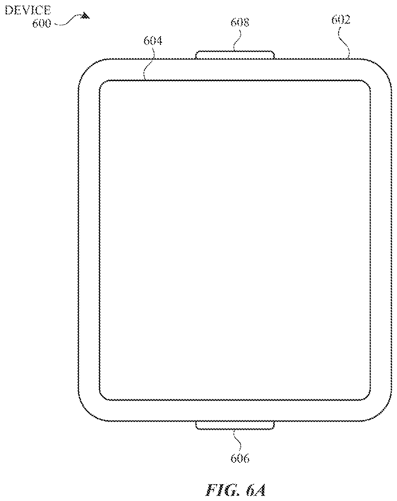

User device 104 can be any suitable electronic device. In some examples, user device is a portable multifunctional device (e.g., device 200, described below with reference to FIG. 2A), a multifunctional device (e.g., device 400, described below with reference to FIG. 4), or a personal electronic device (e.g., device 600, described below with reference to FIG. 6A-B.) A portable multifunctional device is, for example, a mobile telephone that also contains other functions, such as PDA and/or music player functions. Specific examples of portable multifunction devices include the iPhone^{®}, iPod Touch^{®}, and iPad^{®} devices from Apple Inc. of Cupertino, California. Other examples of portable multifunction devices include, without limitation, laptop or tablet computers. Further, in some examples, user device 104 is a non-portable multifunctional device. In particular, user device 104 is a desktop computer, a game console, a television, or a television set-top box. In some examples, user device 104 includes a touch-sensitive surface (e.g., touch screen displays and/or touchpads). Further, user device 104 optionally includes one or more other physical user-interface devices, such as a physical keyboard, a mouse, and/or a joystick. Various examples of electronic devices, such as multifunctional devices, are described below in greater detail.

Examples of communication network(s) 110 include local area networks (LAN) and wide area networks (WAN), e.g., the Internet. Communication network(s) 110 is implemented using any known network protocol, including various wired or wireless protocols, such as, for example, Ethernet, Universal Serial Bus (USB), FIREWIRE, Global System for Mobile Communications (GSM), Enhanced Data GSM Environment (EDGE), code division multiple access (CDMA), time division multiple access (TDMA), Bluetooth, Wi-Fi, voice over Internet Protocol (VoIP), Wi-MAX, or any other suitable communication protocol.

Server system 108 is implemented on one or more standalone data processing apparatus or a distributed network of computers. In some examples, server system 108 also employs various virtual devices and/or services of third-party service providers (e.g., third-party cloud service providers) to provide the underlying computing resources and/or infrastructure resources of server system 108.

In some examples, user device 104 communicates with DA server 106 via second user device 122. Second user device 122 is similar or identical to user device 104. For example, second user device 122 is similar to devices 200, 400, or 600 described below with reference to FIGS. 2A, 4, and 6A-B. User device 104 is configured to communicatively couple to second user device 122 via a direct communication connection, such as Bluetooth, NFC, BTLE, or the like, or via a wired or wireless network, such as a local Wi-Fi network. In some examples, second user device 122 is configured to act as a proxy between user device 104 and DA server 106. For example, DA client 102 of user device 104 is configured to transmit information (e.g., a user request received at user device 104) to DA server 106 via second user device 122. DA server 106 processes the information and return relevant data (e.g., data content responsive to the user request) to user device 104 via second user device 122.

In some examples, user device 104 is configured to communicate abbreviated requests for data to second user device 122 to reduce the amount of information transmitted from user device 104. Second user device 122 is configured to determine supplemental information to add to the abbreviated request to generate a complete request to transmit to DA server 106. This system architecture can advantageously allow user device 104 having limited communication capabilities and/or limited battery power (e.g., a watch or a similar compact electronic device) to access services provided by DA server 106 by using second user device 122, having greater communication capabilities and/or battery power (e.g., a mobile phone, laptop computer, tablet computer, or the like), as a proxy to DA server 106. While only two user devices 104 and 122 are shown in FIG. 1, it should be appreciated that system 100, in some examples, includes any number and type of user devices configured in this proxy configuration to communicate with DA server system 106.

Although the digital assistant shown in FIG. 1 includes both a client-side portion (e.g., DA client 102) and a server-side portion (e.g., DA server 106), in some examples, the functions of a digital assistant are implemented as a standalone application installed on a user device. In addition, the divisions of functionalities between the client and server portions of the digital assistant can vary in different implementations. For instance, in some examples, the DA client is a thin-client that provides only user-facing input and output processing functions, and delegates all other functionalities of the digital assistant to a backend server.

### 2. Electronic Devices

Attention is now directed toward embodiments of electronic devices for implementing the client-side portion of a digital assistant. FIG. 2A is a block diagram illustrating portable multifunction device 200 with touch-sensitive display system 212 in accordance with some embodiments. Touch-sensitive display 212 is sometimes called a "touch screen" for convenience and is sometimes known as or called a "touch-sensitive display system." Device 200 includes memory 202 (which optionally includes one or more computer-readable storage mediums), memory controller 222, one or more processing units (CPUs) 220, peripherals interface 218, RF circuitry 208, audio circuitry 210, speaker 211, microphone 213, input/output (I/O) subsystem 206, other input control devices 216, and external port 224. Device 200 optionally includes one or more optical sensors 264. Device 200 optionally includes one or more contact intensity sensors 265 for detecting intensity of contacts on device 200 (e.g., a touch-sensitive surface such as touch-sensitive display system 212 of device 200). Device 200 optionally includes one or more tactile output generators 267 for generating tactile outputs on device 200 (e.g., generating tactile outputs on a touch-sensitive surface such as touch-sensitive display system 212 of device 200 or touchpad 455 of device 400). These components optionally communicate over one or more communication buses or signal lines 203.

As used in the specification and claims, the term "intensity" of a contact on a touch-sensitive surface refers to the force or pressure (force per unit area) of a contact (e.g., a finger contact) on the touch-sensitive surface, or to a substitute (proxy) for the force or pressure of a contact on the touch-sensitive surface. The intensity of a contact has a range of values that includes at least four distinct values and more typically includes hundreds of distinct values (e.g., at least 256). Intensity of a contact is, optionally, determined (or measured) using various approaches and various sensors or combinations of sensors. For example, one or more force sensors underneath or adjacent to the touch-sensitive surface are, optionally, used to measure force at various points on the touch-sensitive surface. In some implementations, force measurements from multiple force sensors are combined (e.g., a weighted average) to determine an estimated force of a contact. Similarly, a pressure-sensitive tip of a stylus is, optionally, used to determine a pressure of the stylus on the touch-sensitive surface. Alternatively, the size of the contact area detected on the touch-sensitive surface and/or changes thereto, the capacitance of the touch-sensitive surface proximate to the contact and/or changes thereto, and/or the resistance of the touch-sensitive surface proximate to the contact and/or changes thereto are, optionally, used as a substitute for the force or pressure of the contact on the touch-sensitive surface. In some implementations, the substitute measurements for contact force or pressure are used directly to determine whether an intensity threshold has been exceeded (e.g., the intensity threshold is described in units corresponding to the substitute measurements). In some implementations, the substitute measurements for contact force or pressure are converted to an estimated force or pressure, and the estimated force or pressure is used to determine whether an intensity threshold has been exceeded (e.g., the intensity threshold is a pressure threshold measured in units of pressure). Using the intensity of a contact as an attribute of a user input allows for user access to additional device functionality that may otherwise not be accessible by the user on a reduced-size device with limited real estate for displaying affordances (e.g., on a touch-sensitive display) and/or receiving user input (e.g., via a touch-sensitive display, a touch-sensitive surface, or a physical/mechanical control such as a knob or a button).

As used in the specification and claims, the term "tactile output" refers to physical displacement of a device relative to a previous position of the device, physical displacement of a component (e.g., a touch-sensitive surface) of a device relative to another component (e.g., housing) of the device, or displacement of the component relative to a center of mass of the device that will be detected by a user with the user's sense of touch. For example, in situations where the device or the component of the device is in contact with a surface of a user that is sensitive to touch (e.g., a finger, palm, or other part of a user's hand), the tactile output generated by the physical displacement will be interpreted by the user as a tactile sensation corresponding to a perceived change in physical characteristics of the device or the component of the device. For example, movement of a touch-sensitive surface (e.g., a touch-sensitive display or trackpad) is, optionally, interpreted by the user as a "down click" or "up click" of a physical actuator button. In some cases, a user will feel a tactile sensation such as an "down click" or "up click" even when there is no movement of a physical actuator button associated with the touch-sensitive surface that is physically pressed (e.g., displaced) by the user's movements. As another example, movement of the touch-sensitive surface is, optionally, interpreted or sensed by the user as "roughness" of the touch-sensitive surface, even when there is no change in smoothness of the touch-sensitive surface. While such interpretations of touch by a user will be subject to the individualized sensory perceptions of the user, there are many sensory perceptions of touch that are common to a large majority of users. Thus, when a tactile output is described as corresponding to a particular sensory perception of a user (e.g., an "up click," a "down click," "roughness"), unless otherwise stated, the generated tactile output corresponds to physical displacement of the device or a component thereof that will generate the described sensory perception for a typical (or average) user.

It should be appreciated that device 200 is only one example of a portable multifunction device, and that device 200 optionally has more or fewer components than shown, optionally combines two or more components, or optionally has a different configuration or arrangement of the components. The various components shown in FIG. 2A are implemented in hardware, software, or a combination of both hardware and software, including one or more signal processing and/or application-specific integrated circuits.

Memory 202 includes one or more computer-readable storage mediums. The computer-readable storage mediums are, for example, tangible and non-transitory. Memory 202 includes high-speed random access memory and also includes non-volatile memory, such as one or more magnetic disk storage devices, flash memory devices, or other non-volatile solid-state memory devices. Memory controller 222 controls access to memory 202 by other components of device 200.

In some examples, a non-transitory computer-readable storage medium of memory 202 is used to store instructions (e.g., for performing aspects of processes described below) for use by or in connection with an instruction execution system, apparatus, or device, such as a computer-based system, processor-containing system, or other system that can fetch the instructions from the instruction execution system, apparatus, or device and execute the instructions. In other examples, the instructions (e.g., for performing aspects of the processes described below) are stored on a non-transitory computer-readable storage medium (not shown) of the server system 108 or are divided between the non-transitory computer-readable storage medium of memory 202 and the non-transitory computer-readable storage medium of server system 108.

Peripherals interface 218 is used to couple input and output peripherals of the device to CPU 220 and memory 202. The one or more processors 220 run or execute various software programs and/or sets of instructions stored in memory 202 to perform various functions for device 200 and to process data. In some embodiments, peripherals interface 218, CPU 220, and memory controller 222 are implemented on a single chip, such as chip 204. In some other embodiments, they are implemented on separate chips.

RF (radio frequency) circuitry 208 receives and sends RF signals, also called electromagnetic signals. RF circuitry 208 converts electrical signals to/from electromagnetic signals and communicates with communications networks and other communications devices via the electromagnetic signals. RF circuitry 208 optionally includes well-known circuitry for performing these functions, including but not limited to an antenna system, an RF transceiver, one or more amplifiers, a tuner, one or more oscillators, a digital signal processor, a CODEC chipset, a subscriber identity module (SIM) card, memory, and so forth. RF circuitry 208 optionally communicates with networks, such as the Internet, also referred to as the World Wide Web (WWW), an intranet and/or a wireless network, such as a cellular telephone network, a wireless local area network (LAN) and/or a metropolitan area network (MAN), and other devices by wireless communication. The RF circuitry 208 optionally includes well-known circuitry for detecting near field communication (NFC) fields, such as by a short-range communication radio. The wireless communication optionally uses any of a plurality of communications standards, protocols, and technologies, including but not limited to Global System for Mobile Communications (GSM), Enhanced Data GSM Environment (EDGE), high-speed downlink packet access (HSDPA), high-speed uplink packet access (HSUPA), Evolution, Data-Only (EV-DO), HSPA, HSPA+, Dual-Cell HSPA (DC-HSPDA), long term evolution (LTE), near field communication (NFC), wideband code division multiple access (W-CDMA), code division multiple access (CDMA), time division multiple access (TDMA), Bluetooth, Bluetooth Low Energy (BTLE), Wireless Fidelity (Wi-Fi) (e.g., IEEE 802.11a, IEEE 802.11b, IEEE 802.11g, IEEE 802.11n, and/or IEEE 802.11ac), voice over Internet Protocol (VoIP), Wi-MAX, a protocol for e mail (e.g., Internet message access protocol (IMAP) and/or post office protocol (POP)), instant messaging (e.g., extensible messaging and presence protocol (XMPP), Session Initiation Protocol for Instant Messaging and Presence Leveraging Extensions (SIMPLE), Instant Messaging and Presence Service (IMPS)), and/or Short Message Service (SMS), or any other suitable communication protocol, including communication protocols not yet developed as of the filing date of this document.

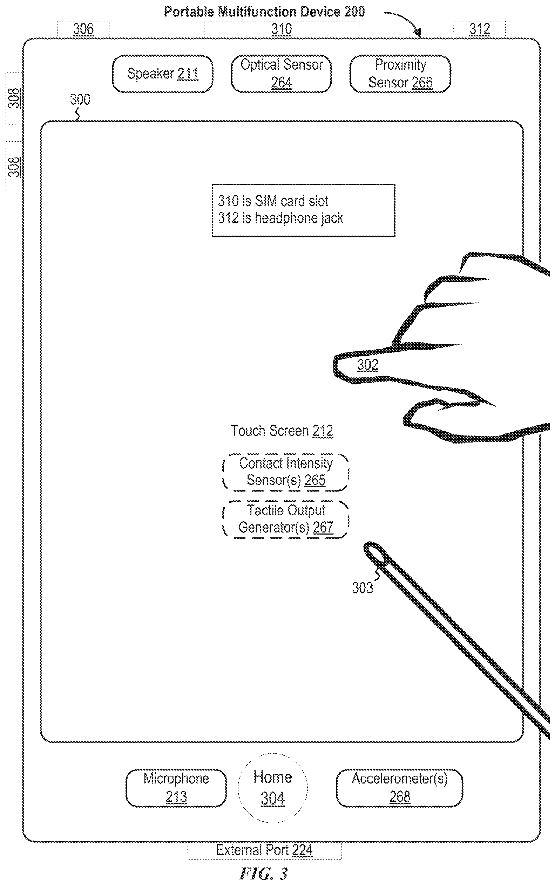

Audio circuitry 210, speaker 211, and microphone 213 provide an audio interface between a user and device 200. Audio circuitry 210 receives audio data from peripherals interface 218, converts the audio data to an electrical signal, and transmits the electrical signal to speaker 211. Speaker 211 converts the electrical signal to human-audible sound waves. Audio circuitry 210 also receives electrical signals converted by microphone 213 from sound waves. Audio circuitry 210 converts the electrical signal to audio data and transmits the audio data to peripherals interface 218 for processing. Audio data are retrieved from and/or transmitted to memory 202 and/or RF circuitry 208 by peripherals interface 218. In some embodiments, audio circuitry 210 also includes a headset jack (e.g., 312, FIG. 3). The headset jack provides an interface between audio circuitry 210 and removable audio input/output peripherals, such as output-only headphones or a headset with both output (e.g., a headphone for one or both ears) and input (e.g., a microphone).

I/O subsystem 206 couples input/output peripherals on device 200, such as touch screen 212 and other input control devices 216, to peripherals interface 218. I/O subsystem 206 optionally includes display controller 256, optical sensor controller 258, intensity sensor controller 259, haptic feedback controller 261, and one or more input controllers 260 for other input or control devices. The one or more input controllers 260 receive/send electrical signals from/to other input control devices 216. The other input control devices 216 optionally include physical buttons (e.g., push buttons, rocker buttons, etc.), dials, slider switches, joysticks, click wheels, and so forth. In some alternate embodiments, input controller(s) 260 are, optionally, coupled to any (or none) of the following: a keyboard, an infrared port, a USB port, and a pointer device such as a mouse. The one or more buttons (e.g., 308, FIG. 3) optionally include an up/down button for volume control of speaker 211 and/or microphone 213. The one or more buttons optionally include a push button (e.g., 306, FIG. 3).

A quick press of the push button disengages a lock of touch screen 212 or begin a process that uses gestures on the touch screen to unlock the device, as described in U.S. Patent Application 11/322,549, "Unlocking a Device by Performing Gestures on an Unlock Image," filed December 23, 2005, U.S. Pat. No. 7,657,849. A longer press of the push button (e.g., 306) turns power to device 200 on or off. The user is able to customize a functionality of one or more of the buttons. Touch screen 212 is used to implement virtual or soft buttons and one or more soft keyboards.

Touch-sensitive display 212 provides an input interface and an output interface between the device and a user. Display controller 256 receives and/or sends electrical signals from/to touch screen 212. Touch screen 212 displays visual output to the user. The visual output includes graphics, text, icons, video, and any combination thereof (collectively termed "graphics"). In some embodiments, some or all of the visual output correspond to user-interface objects.

Touch screen 212 has a touch-sensitive surface, sensor, or set of sensors that accepts input from the user based on haptic and/or tactile contact. Touch screen 212 and display controller 256 (along with any associated modules and/or sets of instructions in memory 202) detect contact (and any movement or breaking of the contact) on touch screen 212 and convert the detected contact into interaction with user-interface objects (e.g., one or more soft keys, icons, web pages, or images) that are displayed on touch screen 212. In an exemplary embodiment, a point of contact between touch screen 212 and the user corresponds to a finger of the user.

Touch screen 212 uses LCD (liquid crystal display) technology, LPD (light emitting polymer display) technology, or LED (light emitting diode) technology, although other display technologies may be used in other embodiments. Touch screen 212 and display controller 256 detect contact and any movement or breaking thereof using any of a plurality of touch sensing technologies now known or later developed, including but not limited to capacitive, resistive, infrared, and surface acoustic wave technologies, as well as other proximity sensor arrays or other elements for determining one or more points of contact with touch screen 212. In an exemplary embodiment, projected mutual capacitance sensing technology is used, such as that found in the iPhone^{®} and iPod Touch^{®} from Apple Inc. of Cupertino, California.

A touch-sensitive display in some embodiments of touch screen 212 is analogous to the multi-touch sensitive touchpads described in the following U.S. Patents: 6,323,846 (Westerman et al.), 6,570,557 (Westerman et al.), and/or 6,677,932 (Westerman), and/or U.S. Patent Publication 2002/0015024A1. However, touch screen 212 displays visual output from device 200, whereas touch-sensitive touchpads do not provide visual output.

A touch-sensitive display in some embodiments of touch screen 212 is as described in the following applications: (1) U.S. Patent Application No. 11/381,313, "Multipoint Touch Surface Controller," filed May 2, 2006; (2) U.S. Patent Application No. 10/840,862, "Multipoint Touchscreen," filed May 6, 2004; (3) U.S. Patent Application No. 10/903,964, "Gestures For Touch Sensitive Input Devices," filed July 30, 2004; (4) U.S. Patent Application No. 11/048,264, "Gestures For Touch Sensitive Input Devices," filed January 31, 2005; (5) U.S. Patent Application No. 11/038,590, "Mode-Based Graphical User Interfaces For Touch Sensitive Input Devices," filed January 18, 2005; (6) U.S. Patent Application No. 11/228,758, "Virtual Input Device Placement On A Touch Screen User Interface," filed September 16, 2005; (7) U.S. Patent Application No. 11/228,700, "Operation Of A Computer With A Touch Screen Interface," filed September 16, 2005; (8) U.S. Patent Application No. 11/228,737, "Activating Virtual Keys Of A Touch-Screen Virtual Keyboard," filed September 16, 2005; and (9) U.S. Patent Application No. 11/367,749, "Multi-Functional Hand-Held Device," filed March 3, 2006.

Touch screen 212 has, for example, a video resolution in excess of 100 dpi. In some embodiments, the touch screen has a video resolution of approximately 160 dpi. The user makes contact with touch screen 212 using any suitable object or appendage, such as a stylus, a finger, and so forth. In some embodiments, the user interface is designed to work primarily with finger-based contacts and gestures, which can be less precise than stylus-based input due to the larger area of contact of a finger on the touch screen. In some embodiments, the device translates the rough finger-based input into a precise pointer/cursor position or command for performing the actions desired by the user.

In some embodiments, in addition to the touch screen, device 200 includes a touchpad (not shown) for activating or deactivating particular functions. In some embodiments, the touchpad is a touch-sensitive area of the device that, unlike the touch screen, does not display visual output. The touchpad is a touch-sensitive surface that is separate from touch screen 212 or an extension of the touch-sensitive surface formed by the touch screen.

Device 200 also includes power system 262 for powering the various components. Power system 262 includes a power management system, one or more power sources (e.g., battery, alternating current (AC)), a recharging system, a power failure detection circuit, a power converter or inverter, a power status indicator (e.g., a light-emitting diode (LED)) and any other components associated with the generation, management and distribution of power in portable devices.

Device 200 also includes one or more optical sensors 264. FIG. 2A shows an optical sensor coupled to optical sensor controller 258 in I/O subsystem 206. Optical sensor 264 includes charge-coupled device (CCD) or complementary metal-oxide semiconductor (CMOS) phototransistors. Optical sensor 264 receives light from the environment, projected through one or more lenses, and converts the light to data representing an image. In conjunction with imaging module 243 (also called a camera module), optical sensor 264 captures still images or video. In some embodiments, an optical sensor is located on the back of device 200, opposite touch screen display 212 on the front of the device so that the touch screen display is used as a viewfinder for still and/or video image acquisition. In some embodiments, an optical sensor is located on the front of the device so that the user's image is obtained for video conferencing while the user views the other video conference participants on the touch screen display. In some embodiments, the position of optical sensor 264 can be changed by the user (e.g., by rotating the lens and the sensor in the device housing) so that a single optical sensor 264 is used along with the touch screen display for both video conferencing and still and/or video image acquisition.

Device 200 optionally also includes one or more contact intensity sensors 265. FIG. 2A shows a contact intensity sensor coupled to intensity sensor controller 259 in I/O subsystem 206. Contact intensity sensor 265 optionally includes one or more piezoresistive strain gauges, capacitive force sensors, electric force sensors, piezoelectric force sensors, optical force sensors, capacitive touch-sensitive surfaces, or other intensity sensors (e.g., sensors used to measure the force (or pressure) of a contact on a touch-sensitive surface). Contact intensity sensor 265 receives contact intensity information (e.g., pressure information or a proxy for pressure information) from the environment. In some embodiments, at least one contact intensity sensor is collocated with, or proximate to, a touch-sensitive surface (e.g., touch-sensitive display system 212). In some embodiments, at least one contact intensity sensor is located on the back of device 200, opposite touch screen display 212, which is located on the front of device 200.

Device 200 also includes one or more proximity sensors 266. FIG. 2A shows proximity sensor 266 coupled to peripherals interface 218. Alternately, proximity sensor 266 is coupled to input controller 260 in I/O subsystem 206. Proximity sensor 266 is performed as described in U.S. Patent Application Nos. 11/241,839, "Proximity Detector In Handheld Device"; 11/240,788, "Proximity Detector In Handheld Device"; 11/620,702, "Using Ambient Light Sensor To Augment Proximity Sensor Output"; 11/586,862, "Automated Response To And Sensing Of User Activity In Portable Devices"; and 11/638,251, "Methods And Systems For Automatic Configuration Of Peripherals". In some embodiments, the proximity sensor turns off and disables touch screen 212 when the multifunction device is placed near the user's ear (e.g., when the user is making a phone call).

Device 200 optionally also includes one or more tactile output generators 267. FIG. 2A shows a tactile output generator coupled to haptic feedback controller 261 in I/O subsystem 206. Tactile output generator 267 optionally includes one or more electroacoustic devices such as speakers or other audio components and/or electromechanical devices that convert energy into linear motion such as a motor, solenoid, electroactive polymer, piezoelectric actuator, electrostatic actuator, or other tactile output generating component (e.g., a component that converts electrical signals into tactile outputs on the device). Contact intensity sensor 265 receives tactile feedback generation instructions from haptic feedback module 233 and generates tactile outputs on device 200 that are capable of being sensed by a user of device 200. In some embodiments, at least one tactile output generator is collocated with, or proximate to, a touch-sensitive surface (e.g., touch-sensitive display system 212) and, optionally, generates a tactile output by moving the touch-sensitive surface vertically (e.g., in/out of a surface of device 200) or laterally (e.g., back and forth in the same plane as a surface of device 200). In some embodiments, at least one tactile output generator sensor is located on the back of device 200, opposite touch screen display 212, which is located on the front of device 200.

Device 200 also includes one or more accelerometers 268. FIG. 2A shows accelerometer 268 coupled to peripherals interface 218. Alternately, accelerometer 268 is coupled to an input controller 260 in I/O subsystem 206. Accelerometer 268 performs, for example, as described in U.S. Patent Publication No. 20050190059, "Acceleration-based Theft Detection System for Portable Electronic Devices," and U.S. Patent Publication No. 20060017692, "Methods And Apparatuses For Operating A Portable Device Based On An Accelerometer". In some embodiments, information is displayed on the touch screen display in a portrait view or a landscape view based on an analysis of data received from the one or more accelerometers. Device 200 optionally includes, in addition to accelerometer(s) 268, a magnetometer (not shown) and a GPS (or GLONASS or other global navigation system) receiver (not shown) for obtaining information concerning the location and orientation (e.g., portrait or landscape) of device 200.

In some embodiments, the software components stored in memory 202 include operating system 226, communication module (or set of instructions) 228, contact/motion module (or set of instructions) 230, graphics module (or set of instructions) 232, text input module (or set of instructions) 234, Global Positioning System (GPS) module (or set of instructions) 235, Digital Assistant Client Module 229, and applications (or sets of instructions) 236. Further, memory 202 stores data and models, such as user data and models 231. Furthermore, in some embodiments, memory 202 (FIG. 2A) or 470 (FIG. 4) stores device/global internal state 257, as shown in FIGS. 2A and 4. Device/global internal state 257 includes one or more of: active application state, indicating which applications, if any, are currently active; display state, indicating what applications, views or other information occupy various regions of touch screen display 212; sensor state, including information obtained from the device's various sensors and input control devices 216; and location information concerning the device's location and/or attitude.

Operating system 226 (e.g., Darwin, RTXC, LINUX, UNIX, OS X, iOS, WINDOWS, or an embedded operating system such as VxWorks) includes various software components and/or drivers for controlling and managing general system tasks (e.g., memory management, storage device control, power management, etc.) and facilitates communication between various hardware and software components.

Communication module 228 facilitates communication with other devices over one or more external ports 224 and also includes various software components for handling data received by RF circuitry 208 and/or external port 224. External port 224 (e.g., Universal Serial Bus (USB), FIREWIRE, etc.) is adapted for coupling directly to other devices or indirectly over a network (e.g., the Internet, wireless LAN, etc.). In some embodiments, the external port is a multi-pin (e.g., 30-pin) connector that is the same as, or similar to and/or compatible with, the 30-pin connector used on iPod^{®} (trademark of Apple Inc.) devices.

Contact/motion module 230 optionally detects contact with touch screen 212 (in conjunction with display controller 256) and other touch-sensitive devices (e.g., a touchpad or physical click wheel). Contact/motion module 230 includes various software components for performing various operations related to detection of contact, such as determining if contact has occurred (e.g., detecting a finger-down event), determining an intensity of the contact (e.g., the force or pressure of the contact or a substitute for the force or pressure of the contact), determining if there is movement of the contact and tracking the movement across the touch-sensitive surface (e.g., detecting one or more finger-dragging events), and determining if the contact has ceased (e.g., detecting a finger-up event or a break in contact). Contact/motion module 230 receives contact data from the touch-sensitive surface. Determining movement of the point of contact, which is represented by a series of contact data, optionally includes determining speed (magnitude), velocity (magnitude and direction), and/or an acceleration (a change in magnitude and/or direction) of the point of contact. These operations are, optionally, applied to single contacts (e.g., one finger contacts) or to multiple simultaneous contacts (e.g., "multitouch"/multiple finger contacts). In some embodiments, contact/motion module 230 and display controller 256 detect contact on a touchpad.

In some embodiments, contact/motion module 230 uses a set of one or more intensity thresholds to determine whether an operation has been performed by a user (e.g., to determine whether a user has "clicked" on an icon). In some embodiments, at least a subset of the intensity thresholds are determined in accordance with software parameters (e.g., the intensity thresholds are not determined by the activation thresholds of particular physical actuators and can be adjusted without changing the physical hardware of device 200). For example, a mouse "click" threshold of a trackpad or touch screen display can be set to any of a large range of predefined threshold values without changing the trackpad or touch screen display hardware. Additionally, in some implementations, a user of the device is provided with software settings for adjusting one or more of the set of intensity thresholds (e.g., by adjusting individual intensity thresholds and/or by adjusting a plurality of intensity thresholds at once with a system-level click "intensity" parameter).

Contact/motion module 230 optionally detects a gesture input by a user. Different gestures on the touch-sensitive surface have different contact patterns (e.g., different motions, timings, and/or intensities of detected contacts). Thus, a gesture is, optionally, detected by detecting a particular contact pattern. For example, detecting a finger tap gesture includes detecting a finger-down event followed by detecting a finger-up (liftoff) event at the same position (or substantially the same position) as the finger-down event (e.g., at the position of an icon). As another example, detecting a finger swipe gesture on the touch-sensitive surface includes detecting a finger-down event followed by detecting one or more finger-dragging events, and subsequently followed by detecting a finger-up (liftoff) event.

Graphics module 232 includes various known software components for rendering and displaying graphics on touch screen 212 or other display, including components for changing the visual impact (e.g., brightness, transparency, saturation, contrast, or other visual property) of graphics that are displayed. As used herein, the term "graphics" includes any object that can be displayed to a user, including ,without limitation, text, web pages, icons (such as user-interface objects including soft keys), digital images, videos, animations, and the like.

In some embodiments, graphics module 232 stores data representing graphics to be used. Each graphic is, optionally, assigned a corresponding code. Graphics module 232 receives, from applications etc., one or more codes specifying graphics to be displayed along with, if necessary, coordinate data and other graphic property data, and then generates screen image data to output to display controller 256.

Haptic feedback module 233 includes various software components for generating instructions used by tactile output generator(s) 267 to produce tactile outputs at one or more locations on device 200 in response to user interactions with device 200.

Text input module 234, which is, in some examples, a component of graphics module 232, provides soft keyboards for entering text in various applications (e.g., contacts 237, email 240, IM 241, browser 247, and any other application that needs text input).

GPS module 235 determines the location of the device and provides this information for use in various applications (e.g., to telephone 238 for use in location-based dialing; to camera 243 as picture/video metadata; and to applications that provide location-based services such as weather widgets, local yellow page widgets, and map/navigation widgets).

Digital assistant client module 229 includes various client-side digital assistant instructions to provide the client-side functionalities of the digital assistant. For example, digital assistant client module 229 is capable of accepting voice input (e.g., speech input), text input, touch input, and/or gestural input through various user interfaces (e.g., microphone 213, accelerometer(s) 268, touch-sensitive display system 212, optical sensor(s) 229, other input control devices 216, etc.) of portable multifunction device 200. Digital assistant client module 229 is also capable of providing output in audio (e.g., speech output), visual, and/or tactile forms through various output interfaces (e.g., speaker 211, touch-sensitive display system 212, tactile output generator(s) 267, etc.) of portable multifunction device 200. For example, output is provided as voice, sound, alerts, text messages, menus, graphics, videos, animations, vibrations, and/or combinations of two or more of the above. During operation, digital assistant client module 229 communicates with DA server 106 using RF circuitry 208.

User data and models 231 include various data associated with the user (e.g., user-specific vocabulary data, user preference data, user-specified name pronunciations, data from the user's electronic address book, to-do lists, shopping lists, etc.) to provide the client-side functionalities of the digital assistant. Further, user data and models 231 include various models (e.g., speech recognition models, statistical language models, natural language processing models, ontology, task flow models, service models, etc.) for processing user input and determining user intent.

In some examples, digital assistant client module 229 utilizes the various sensors, subsystems, and peripheral devices of portable multifunction device 200 to gather additional information from the surrounding environment of the portable multifunction device 200 to establish a context associated with a user, the current user interaction, and/or the current user input. In some examples, digital assistant client module 229 provides the contextual information or a subset thereof with the user input to DA server 106 to help infer the user's intent. In some examples, the digital assistant also uses the contextual information to determine how to prepare and deliver outputs to the user. Contextual information is referred to as context data.

In some examples, the contextual information that accompanies the user input includes sensor information, e.g., lighting, ambient noise, ambient temperature, images or videos of the surrounding environment, etc. In some examples, the contextual information can also includes the physical state of the device, e.g., device orientation, device location, device temperature, power level, speed, acceleration, motion patterns, cellular signals strength, etc. In some examples, information related to the software state of DA server 106, e.g., running processes, installed programs, past and present network activities, background services, error logs, resources usage, etc., and of portable multifunction device 200 is provided to DA server 106 as contextual information associated with a user input.

In some examples, the digital assistant client module 229 selectively provides information (e.g., user data 231) stored on the portable multifunction device 200 in response to requests from DA server 106. In some examples, digital assistant client module 229 also elicits additional input from the user via a natural language dialogue or other user interfaces upon request by DA server 106. Digital assistant client module 229 passes the additional input to DA server 106 to help DA server 106 in intent deduction and/or fulfillment of the user's intent expressed in the user request.

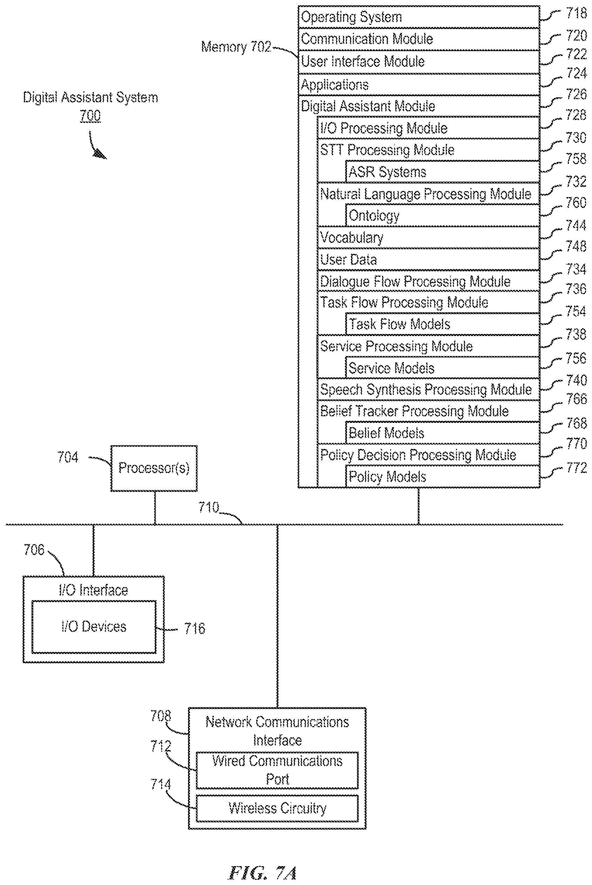

A more detailed description of a digital assistant is described below with reference to FIGS. 7A-7C. It should be recognized that digital assistant client module 229 can include any number of the sub-modules of digital assistant module 726 described below.

Applications 236 include the following modules (or sets of instructions), or a subset or superset thereof:
- Contacts module 237 (sometimes called an address book or contact list);
- Telephone module 238;
- Video conference module 239;
- E-mail client module 240;
- Instant messaging (IM) module 241;
- Workout support module 242;
- Camera module 243 for still and/or video images;
- Image management module 244;
- Video player module;
- Music player module;
- Browser module 247;
- Calendar module 248;
- Widget modules 249, which includes, in some examples, one or more of: weather widget 249-1, stocks widget 249-2, calculator widget 249-3, alarm clock widget 249-4, dictionary widget 249-5, and other widgets obtained by the user, as well as user-created widgets 249-6;
- Widget creator module 250 for making user-created widgets 249-6;
- Search module 251;
- Video and music player module 252, which merges video player module and music player module;
- Notes module 253;
- Map module 254; and/or
- Online video module 255.

Examples of other applications 236 that are stored in memory 202 include other word processing applications, other image editing applications, drawing applications, presentation applications, JAVA-enabled applications, encryption, digital rights management, voice recognition, and voice replication.

In conjunction with touch screen 212, display controller 256, contact/motion module 230, graphics module 232, and text input module 234, contacts module 237 are used to manage an address book or contact list (e.g., stored in application internal state 292 of contacts module 237 in memory 202 or memory 470), including: adding name(s) to the address book; deleting name(s) from the address book; associating telephone number(s), e-mail address(es), physical address(es) or other information with a name; associating an image with a name; categorizing and sorting names; providing telephone numbers or e-mail addresses to initiate and/or facilitate communications by telephone 238, video conference module 239, e-mail 240, or IM 241; and so forth.

In conjunction with RF circuitry 208, audio circuitry 210, speaker 211, microphone 213, touch screen 212, display controller 256, contact/motion module 230, graphics module 232, and text input module 234, telephone module 238 are used to enter a sequence of characters corresponding to a telephone number, access one or more telephone numbers in contacts module 237, modify a telephone number that has been entered, dial a respective telephone number, conduct a conversation, and disconnect or hang up when the conversation is completed. As noted above, the wireless communication uses any of a plurality of communications standards, protocols, and technologies.

In conjunction with RF circuitry 208, audio circuitry 210, speaker 211, microphone 213, touch screen 212, display controller 256, optical sensor 264, optical sensor controller 258, contact/motion module 230, graphics module 232, text input module 234, contacts module 237, and telephone module 238, video conference module 239 includes executable instructions to initiate, conduct, and terminate a video conference between a user and one or more other participants in accordance with user instructions.

In conjunction with RF circuitry 208, touch screen 212, display controller 256, contact/motion module 230, graphics module 232, and text input module 234, e-mail client module 240 includes executable instructions to create, send, receive, and manage e-mail in response to user instructions. In conjunction with image management module 244, e-mail client module 240 makes it very easy to create and send e-mails with still or video images taken with camera module 243.

In conjunction with RF circuitry 208, touch screen 212, display controller 256, contact/motion module 230, graphics module 232, and text input module 234, the instant messaging module 241 includes executable instructions to enter a sequence of characters corresponding to an instant message, to modify previously entered characters, to transmit a respective instant message (for example, using a Short Message Service (SMS) or Multimedia Message Service (MMS) protocol for telephony-based instant messages or using XMPP, SIMPLE, or IMPS for Internet-based instant messages), to receive instant messages, and to view received instant messages. In some embodiments, transmitted and/or received instant messages include graphics, photos, audio files, video files and/or other attachments as are supported in an MMS and/or an Enhanced Messaging Service (EMS). As used herein, "instant messaging" refers to both telephony-based messages (e.g., messages sent using SMS or MMS) and Internet-based messages (e.g., messages sent using XMPP, SIMPLE, or IMPS).

In conjunction with RF circuitry 208, touch screen 212, display controller 256, contact/motion module 230, graphics module 232, text input module 234, GPS module 235, map module 254, and music player module, workout support module 242 includes executable instructions to create workouts (e.g., with time, distance, and/or calorie burning goals); communicate with workout sensors (sports devices); receive workout sensor data; calibrate sensors used to monitor a workout; select and play music for a workout; and display, store, and transmit workout data.

In conjunction with touch screen 212, display controller 256, optical sensor(s) 264, optical sensor controller 258, contact/motion module 230, graphics module 232, and image management module 244, camera module 243 includes executable instructions to capture still images or video (including a video stream) and store them into memory 202, modify characteristics of a still image or video, or delete a still image or video from memory 202.

In conjunction with touch screen 212, display controller 256, contact/motion module 230, graphics module 232, text input module 234, and camera module 243, image management module 244 includes executable instructions to arrange, modify (e.g., edit), or otherwise manipulate, label, delete, present (e.g., in a digital slide show or album), and store still and/or video images.

In conjunction with RF circuitry 208, touch screen 212, display controller 256, contact/motion module 230, graphics module 232, and text input module 234, browser module 247 includes executable instructions to browse the Internet in accordance with user instructions, including searching, linking to, receiving, and displaying web pages or portions thereof, as well as attachments and other files linked to web pages.

In conjunction with RF circuitry 208, touch screen 212, display controller 256, contact/motion module 230, graphics module 232, text input module 234, e-mail client module 240, and browser module 247, calendar module 248 includes executable instructions to create, display, modify, and store calendars and data associated with calendars (e.g., calendar entries, to-do lists, etc.) in accordance with user instructions.

In conjunction with RF circuitry 208, touch screen 212, display controller 256, contact/motion module 230, graphics module 232, text input module 234, and browser module 247, widget modules 249 are mini-applications that can be downloaded and used by a user (e.g., weather widget 249-1, stocks widget 249-2, calculator widget 249-3, alarm clock widget 249-4, and dictionary widget 249-5) or created by the user (e.g., user-created widget 249-6). In some embodiments, a widget includes an HTML (Hypertext Markup Language) file, a CSS (Cascading Style Sheets) file, and a JavaScript file. In some embodiments, a widget includes an XML (Extensible Markup Language) file and a JavaScript file (e.g., Yahoo! Widgets).

In conjunction with RF circuitry 208, touch screen 212, display controller 256, contact/motion module 230, graphics module 232, text input module 234, and browser module 247, the widget creator module 250 are used by a user to create widgets (e.g., turning a user-specified portion of a web page into a widget).

In conjunction with touch screen 212, display controller 256, contact/motion module 230, graphics module 232, and text input module 234, search module 251 includes executable instructions to search for text, music, sound, image, video, and/or other files in memory 202 that match one or more search criteria (e.g., one or more user-specified search terms) in accordance with user instructions.

In conjunction with touch screen 212, display controller 256, contact/motion module 230, graphics module 232, audio circuitry 210, speaker 211, RF circuitry 208, and browser module 247, video and music player module 252 includes executable instructions that allow the user to download and play back recorded music and other sound files stored in one or more file formats, such as MP3 or AAC files, and executable instructions to display, present, or otherwise play back videos (e.g., on touch screen 212 or on an external, connected display via external port 224). In some embodiments, device 200 optionally includes the functionality of an MP3 player, such as an iPod (trademark of Apple Inc.).

In conjunction with touch screen 212, display controller 256, contact/motion module 230, graphics module 232, and text input module 234, notes module 253 includes executable instructions to create and manage notes, to-do lists, and the like in accordance with user instructions.

In conjunction with RF circuitry 208, touch screen 212, display controller 256, contact/motion module 230, graphics module 232, text input module 234, GPS module 235, and browser module 247, map module 254 are used to receive, display, modify, and store maps and data associated with maps (e.g., driving directions, data on stores and other points of interest at or near a particular location, and other location-based data) in accordance with user instructions.

In conjunction with touch screen 212, display controller 256, contact/motion module 230, graphics module 232, audio circuitry 210, speaker 211, RF circuitry 208, text input module 234, e-mail client module 240, and browser module 247, online video module 255 includes instructions that allow the user to access, browse, receive (e.g., by streaming and/or download), play back (e.g., on the touch screen or on an external, connected display via external port 224), send an e-mail with a link to a particular online video, and otherwise manage online videos in one or more file formats, such as H.264. In some embodiments, instant messaging module 241, rather than e-mail client module 240, is used to send a link to a particular online video. Additional description of the online video application can be found in U.S. Provisional Patent Application No. 60/936,562, "Portable Multifunction Device, Method, and Graphical User Interface for Playing Online Videos," filed June 20, 2007, and U.S. Patent Application No. 11/968,067, "Portable Multifunction Device, Method, and Graphical User Interface for Playing Online Videos," filed December 31, 2007.

Each of the above-identified modules and applications corresponds to a set of executable instructions for performing one or more functions described above and the methods described in this application (e.g., the computer-implemented methods and other information processing methods described herein). These modules (e.g., sets of instructions) need not be implemented as separate software programs, procedures, or modules, and thus various subsets of these modules can be combined or otherwise rearranged in various embodiments. For example, video player module can be combined with music player module into a single module (e.g., video and music player module 252, FIG. 2A). In some embodiments, memory 202 stores a subset of the modules and data structures identified above. Furthermore, memory 202 stores additional modules and data structures not described above.

In some embodiments, device 200 is a device where operation of a predefined set of functions on the device is performed exclusively through a touch screen and/or a touchpad. By using a touch screen and/or a touchpad as the primary input control device for operation of device 200, the number of physical input control devices (such as push buttons, dials, and the like) on device 200 is reduced.

The predefined set of functions that are performed exclusively through a touch screen and/or a touchpad optionally include navigation between user interfaces. In some embodiments, the touchpad, when touched by the user, navigates device 200 to a main, home, or root menu from any user interface that is displayed on device 200. In such embodiments, a "menu button" is implemented using a touchpad. In some other embodiments, the menu button is a physical push button or other physical input control device instead of a touchpad.

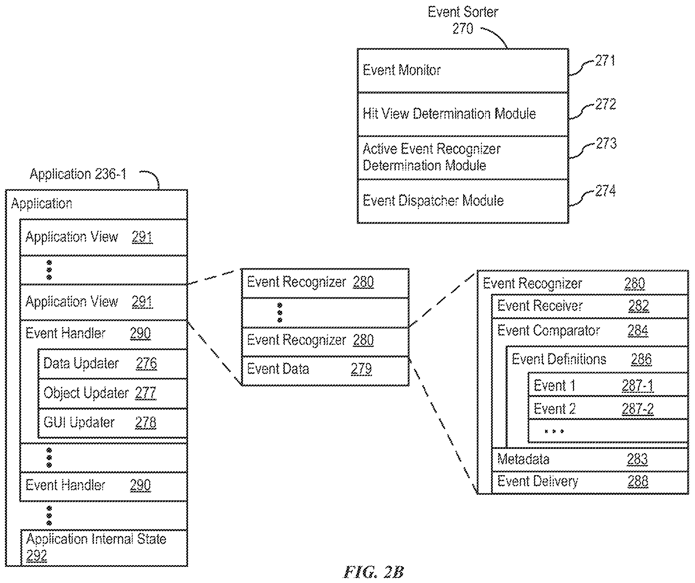

FIG. 2B is a block diagram illustrating exemplary components for event handling in accordance with some embodiments. In some embodiments, memory 202 (FIG. 2A) or 470 (FIG. 4) includes event sorter 270 (e.g., in operating system 226) and a respective application 236-1 (e.g., any of the aforementioned applications 237-251, 255, 480-490).

Event sorter 270 receives event information and determines the application 236-1 and application view 291 of application 236-1 to which to deliver the event information. Event sorter 270 includes event monitor 271 and event dispatcher module 274. In some embodiments, application 236-1 includes application internal state 292, which indicates the current application view(s) displayed on touch-sensitive display 212 when the application is active or executing. In some embodiments, device/global internal state 257 is used by event sorter 270 to determine which application(s) is (are) currently active, and application internal state 292 is used by event sorter 270 to determine application views 291 to which to deliver event information.

In some embodiments, application internal state 292 includes additional information, such as one or more of: resume information to be used when application 236-1 resumes execution, user interface state information that indicates information being displayed or that is ready for display by application 236-1, a state queue for enabling the user to go back to a prior state or view of application 236-1, and a redo/undo queue of previous actions taken by the user.

Event monitor 271 receives event information from peripherals interface 218. Event information includes information about a sub-event (e.g., a user touch on touch-sensitive display 212, as part of a multi-touch gesture). Peripherals interface 218 transmits information it receives from I/O subsystem 206 or a sensor, such as proximity sensor 266, accelerometer(s) 268, and/or microphone 213 (through audio circuitry 210). Information that peripherals interface 218 receives from I/O subsystem 206 includes information from touch-sensitive display 212 or a touch-sensitive surface.

In some embodiments, event monitor 271 sends requests to the peripherals interface 218 at predetermined intervals. In response, peripherals interface 218 transmits event information. In other embodiments, peripherals interface 218 transmits event information only when there is a significant event (e.g., receiving an input above a predetermined noise threshold and/or for more than a predetermined duration).

In some embodiments, event sorter 270 also includes a hit view determination module 272 and/or an active event recognizer determination module 273.

Hit view determination module 272 provides software procedures for determining where a sub-event has taken place within one or more views when touch-sensitive display 212 displays more than one view. Views are made up of controls and other elements that a user can see on the display.

Another aspect of the user interface associated with an application is a set of views, sometimes herein called application views or user interface windows, in which information is displayed and touch-based gestures occur. The application views (of a respective application) in which a touch is detected correspond to programmatic levels within a programmatic or view hierarchy of the application. For example, the lowest level view in which a touch is detected is called the hit view, and the set of events that are recognized as proper inputs is determined based, at least in part, on the hit view of the initial touch that begins a touch-based gesture.

Hit view determination module 272 receives information related to sub events of a touch-based gesture. When an application has multiple views organized in a hierarchy, hit view determination module 272 identifies a hit view as the lowest view in the hierarchy which should handle the sub-event. In most circumstances, the hit view is the lowest level view in which an initiating sub-event occurs (e.g., the first sub-event in the sequence of sub-events that form an event or potential event). Once the hit view is identified by the hit view determination module 272, the hit view typically receives all sub-events related to the same touch or input source for which it was identified as the hit view.

Active event recognizer determination module 273 determines which view or views within a view hierarchy should receive a particular sequence of sub-events. In some embodiments, active event recognizer determination module 273 determines that only the hit view should receive a particular sequence of sub-events. In other embodiments, active event recognizer determination module 273 determines that all views that include the physical location of a sub-event are actively involved views, and therefore determines that all actively involved views should receive a particular sequence of sub-events. In other embodiments, even if touch sub-events were entirely confined to the area associated with one particular view, views higher in the hierarchy would still remain as actively involved views.

Event dispatcher module 274 dispatches the event information to an event recognizer (e.g., event recognizer 280). In embodiments including active event recognizer determination module 273, event dispatcher module 274 delivers the event information to an event recognizer determined by active event recognizer determination module 273. In some embodiments, event dispatcher module 274 stores in an event queue the event information, which is retrieved by a respective event receiver 282.

In some embodiments, operating system 226 includes event sorter 270. Alternatively, application 236-1 includes event sorter 270. In yet other embodiments, event sorter 270 is a stand-alone module, or a part of another module stored in memory 202, such as contact/motion module 230.

In some embodiments, application 236-1 includes a plurality of event handlers 290 and one or more application views 291, each of which includes instructions for handling touch events that occur within a respective view of the application's user interface. Each application view 291 of the application 236-1 includes one or more event recognizers 280. Typically, a respective application view 291 includes a plurality of event recognizers 280. In other embodiments, one or more of event recognizers 280 are part of a separate module, such as a user interface kit (not shown) or a higher level object from which application 236-1 inherits methods and other properties. In some embodiments, a respective event handler 290 includes one or more of: data updater 276, object updater 277, GUI updater 278, and/or event data 279 received from event sorter 270. Event handler 290 utilizes or calls data updater 276, object updater 277, or GUI updater 278 to update the application internal state 292. Alternatively, one or more of the application views 291 include one or more respective event handlers 290. Also, in some embodiments, one or more of data updater 276, object updater 277, and GUI updater 278 are included in a respective application view 291.

A respective event recognizer 280 receives event information (e.g., event data 279) from event sorter 270 and identifies an event from the event information. Event recognizer 280 includes event receiver 282 and event comparator 284. In some embodiments, event recognizer 280 also includes at least a subset of: metadata 283, and event delivery instructions 288 (which include sub-event delivery instructions).

Event receiver 282 receives event information from event sorter 270. The event information includes information about a sub-event, for example, a touch or a touch movement. Depending on the sub-event, the event information also includes additional information, such as location of the sub-event. When the sub-event concerns motion of a touch, the event information also includes speed and direction of the sub-event. In some embodiments, events include rotation of the device from one orientation to another (e.g., from a portrait orientation to a landscape orientation, or vice versa), and the event information includes corresponding information about the current orientation (also called device attitude) of the device.

Event comparator 284 compares the event information to predefined event or sub-event definitions and, based on the comparison, determines an event or sub event, or determines or updates the state of an event or sub-event. In some embodiments, event comparator 284 includes event definitions 286. Event definitions 286 contain definitions of events (e.g., predefined sequences of sub-events), for example, event 1 (287-1), event 2 (287-2), and others. In some embodiments, sub-events in an event (287) include, for example, touch begin, touch end, touch movement, touch cancellation, and multiple touching. In one example, the definition for event 1 (287-1) is a double tap on a displayed object. The double tap, for example, comprises a first touch (touch begin) on the displayed object for a predetermined phase, a first liftoff (touch end) for a predetermined phase, a second touch (touch begin) on the displayed object for a predetermined phase, and a second liftoff (touch end) for a predetermined phase. In another example, the definition for event 2 (287-2) is a dragging on a displayed object. The dragging, for example, comprises a touch (or contact) on the displayed object for a predetermined phase, a movement of the touch across touch-sensitive display 212, and liftoff of the touch (touch end). In some embodiments, the event also includes information for one or more associated event handlers 290.

In some embodiments, event definition 287 includes a definition of an event for a respective user-interface object. In some embodiments, event comparator 284 performs a hit test to determine which user-interface object is associated with a sub-event. For example, in an application view in which three user-interface objects are displayed on touch-sensitive display 212, when a touch is detected on touch-sensitive display 212, event comparator 284 performs a hit test to determine which of the three user-interface objects is associated with the touch (sub-event). If each displayed object is associated with a respective event handler 290, the event comparator uses the result of the hit test to determine which event handler 290 should be activated. For example, event comparator 284 selects an event handler associated with the sub-event and the object triggering the hit test.

In some embodiments, the definition for a respective event (287) also includes delayed actions that delay delivery of the event information until after it has been determined whether the sequence of sub-events does or does not correspond to the event recognizer's event type.

When a respective event recognizer 280 determines that the series of sub-events do not match any of the events in event definitions 286, the respective event recognizer 280 enters an event impossible, event failed, or event ended state, after which it disregards subsequent sub-events of the touch-based gesture. In this situation, other event recognizers, if any, that remain active for the hit view continue to track and process sub-events of an ongoing touch-based gesture.

In some embodiments, a respective event recognizer 280 includes metadata 283 with configurable properties, flags, and/or lists that indicate how the event delivery system should perform sub-event delivery to actively involved event recognizers. In some embodiments, metadata 283 includes configurable properties, flags, and/or lists that indicate how event recognizers interact, or are enabled to interact, with one another. In some embodiments, metadata 283 includes configurable properties, flags, and/or lists that indicate whether sub-events are delivered to varying levels in the view or programmatic hierarchy.

In some embodiments, a respective event recognizer 280 activates event handler 290 associated with an event when one or more particular sub-events of an event are recognized. In some embodiments, a respective event recognizer 280 delivers event information associated with the event to event handler 290. Activating an event handler 290 is distinct from sending (and deferred sending) sub-events to a respective hit view. In some embodiments, event recognizer 280 throws a flag associated with the recognized event, and event handler 290 associated with the flag catches the flag and performs a predefined process.

In some embodiments, event delivery instructions 288 include sub-event delivery instructions that deliver event information about a sub-event without activating an event handler. Instead, the sub-event delivery instructions deliver event information to event handlers associated with the series of sub-events or to actively involved views. Event handlers associated with the series of sub-events or with actively involved views receive the event information and perform a predetermined process.

In some embodiments, data updater 276 creates and updates data used in application 236-1. For example, data updater 276 updates the telephone number used in contacts module 237, or stores a video file used in video player module. In some embodiments, object updater 277 creates and updates objects used in application 236-1. For example, object updater 277 creates a new user-interface object or updates the position of a user-interface object. GUI updater 278 updates the GUI. For example, GUI updater 278 prepares display information and sends it to graphics module 232 for display on a touch-sensitive display.

In some embodiments, event handler(s) 290 includes or has access to data updater 276, object updater 277, and GUI updater 278. In some embodiments, data updater 276, object updater 277, and GUI updater 278 are included in a single module of a respective application 236-1 or application view 291. In other embodiments, they are included in two or more software modules.

It shall be understood that the foregoing discussion regarding event handling of user touches on touch-sensitive displays also applies to other forms of user inputs to operate multifunction devices 200 with input devices, not all of which are initiated on touch screens. For example, mouse movement and mouse button presses, optionally coordinated with single or multiple keyboard presses or holds; contact movements such as taps, drags, scrolls, etc. on touchpads; pen stylus inputs; movement of the device; oral instructions; detected eye movements; biometric inputs; and/or any combination thereof are optionally utilized as inputs corresponding to sub-events which define an event to be recognized.

FIG. 3 illustrates a portable multifunction device 200 having a touch screen 212 in accordance with some embodiments. The touch screen optionally displays one or more graphics within user interface (UI) 300. In this embodiment, as well as others described below, a user is enabled to select one or more of the graphics by making a gesture on the graphics, for example, with one or more fingers 302 (not drawn to scale in the figure) or one or more styluses 303 (not drawn to scale in the figure). In some embodiments, selection of one or more graphics occurs when the user breaks contact with the one or more graphics. In some embodiments, the gesture optionally includes one or more taps, one or more swipes (from left to right, right to left, upward and/or downward), and/or a rolling of a finger (from right to left, left to right, upward and/or downward) that has made contact with device 200. In some implementations or circumstances, inadvertent contact with a graphic does not select the graphic. For example, a swipe gesture that sweeps over an application icon optionally does not select the corresponding application when the gesture corresponding to selection is a tap.

Device 200 also includes one or more physical buttons, such as "home" or menu button 304. As described previously, menu button 304 is used to navigate to any application 236 in a set of applications that is executed on device 200. Alternatively, in some embodiments, the menu button is implemented as a soft key in a GUI displayed on touch screen 212.

In one embodiment, device 200 includes touch screen 212, menu button 304, push button 306 for powering the device on/off and locking the device, volume adjustment button(s) 308, subscriber identity module (SIM) card slot 310, headset jack 312, and docking/charging external port 224. Push button 306 is, optionally, used to turn the power on/off on the device by depressing the button and holding the button in the depressed state for a predefined time interval; to lock the device by depressing the button and releasing the button before the predefined time interval has elapsed; and/or to unlock the device or initiate an unlock process. In an alternative embodiment, device 200 also accepts verbal input for activation or deactivation of some functions through microphone 213. Device 200 also, optionally, includes one or more contact intensity sensors 265 for detecting intensity of contacts on touch screen 212 and/or one or more tactile output generators 267 for generating tactile outputs for a user of device 200.

FIG. 4 is a block diagram of an exemplary multifunction device with a display and a touch-sensitive surface in accordance with some embodiments. Device 400 need not be portable. In some embodiments, device 400 is a laptop computer, a desktop computer, a tablet computer, a multimedia player device, a navigation device, an educational device (such as a child's learning toy), a gaming system, or a control device (e.g., a home or industrial controller). Device 400 typically includes one or more processing units (CPUs) 410, one or more network or other communications interfaces 460, memory 470, and one or more communication buses 420 for interconnecting these components. Communication buses 420 optionally include circuitry (sometimes called a chipset) that interconnects and controls communications between system components. Device 400 includes input/output (I/O) interface 430 comprising display 440, which is typically a touch screen display. I/O interface 430 also optionally includes a keyboard and/or mouse (or other pointing device) 450 and touchpad 455, tactile output generator 457 for generating tactile outputs on device 400 (e.g., similar to tactile output generator(s) 267 described above with reference to FIG. 2A), sensors 459 (e.g., optical, acceleration, proximity, touch-sensitive, and/or contact intensity sensors similar to contact intensity sensor(s) 265 described above with reference to FIG. 2A). Memory 470 includes high-speed random access memory, such as DRAM, SRAM, DDR RAM, or other random access solid state memory devices; and optionally includes non-volatile memory, such as one or more magnetic disk storage devices, optical disk storage devices, flash memory devices, or other non-volatile solid state storage devices. Memory 470 optionally includes one or more storage devices remotely located from CPU(s) 410. In some embodiments, memory 470 stores programs, modules, and data structures analogous to the programs, modules, and data structures stored in memory 202 of portable multifunction device 200 (FIG. 2A), or a subset thereof. Furthermore, memory 470 optionally stores additional programs, modules, and data structures not present in memory 202 of portable multifunction device 200. For example, memory 470 of device 400 optionally stores drawing module 480, presentation module 482, word processing module 484, website creation module 486, disk authoring module 488, and/or spreadsheet module 490, while memory 202 of portable multifunction device 200 (FIG. 2A) optionally does not store these modules.

Each of the above-identified elements in FIG. 4 is, in some examples, stored in one or more of the previously mentioned memory devices. Each of the above-identified modules corresponds to a set of instructions for performing a function described above. The above-identified modules or programs (e.g., sets of instructions) need not be implemented as separate software programs, procedures, or modules, and thus various subsets of these modules are combined or otherwise rearranged in various embodiments. In some embodiments, memory 470 stores a subset of the modules and data structures identified above. Furthermore, memory 470 stores additional modules and data structures not described above.

Attention is now directed towards embodiments of user interfaces that can be implemented on, for example, portable multifunction device 200.

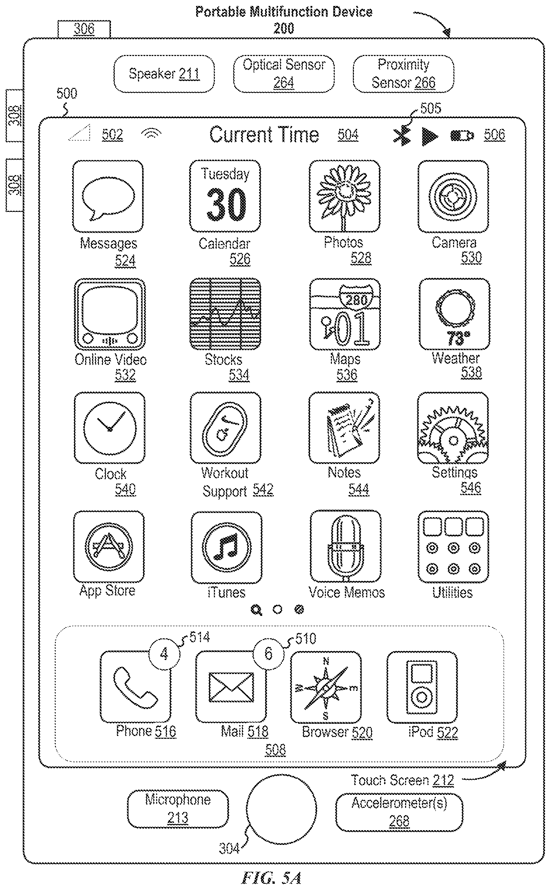

FIG. 5A illustrates an exemplary user interface for a menu of applications on portable multifunction device 200 in accordance with some embodiments. Similar user interfaces are implemented on device 400. In some embodiments, user interface 500 includes the following elements, or a subset or superset thereof:

Signal strength indicator(s) 502 for wireless communication(s), such as cellular and Wi-Fi signals;
- Time 504;
- Bluetooth indicator 505;
- Battery status indicator 506;
- Tray 508 with icons for frequently used applications, such as:
   ∘ Icon 516 for telephone module 238, labeled "Phone," which optionally includes an indicator 514 of the number of missed calls or voicemail messages;
   ∘ Icon 518 for e-mail client module 240, labeled "Mail," which optionally includes an indicator 510 of the number of unread e-mails;
   ∘ Icon 520 for browser module 247, labeled "Browser;" and
   ∘ Icon 522 for video and music player module 252, also referred to as iPod (trademark of Apple Inc.) module 252, labeled "iPod;" and
- Icons for other applications, such as:
   ∘ Icon 524 for IM module 241, labeled "Messages;"
   ∘ Icon 526 for calendar module 248, labeled "Calendar;"
   ∘ Icon 528 for image management module 244, labeled "Photos;"
   ∘ Icon 530 for camera module 243, labeled "Camera;"
   ∘ Icon 532 for online video module 255, labeled "Online Video;"
   ∘ Icon 534 for stocks widget 249-2, labeled "Stocks;"
   ∘ Icon 536 for map module 254, labeled "Maps;"
   ∘ Icon 538 for weather widget 249-1, labeled "Weather;"
   ∘ Icon 540 for alarm clock widget 249-4, labeled "Clock;"
   ∘ Icon 542 for workout support module 242, labeled "Workout Support;"
   ∘ Icon 544 for notes module 253, labeled "Notes;" and
   ∘ Icon 546 for a settings application or module, labeled "Settings," which provides access to settings for device 200 and its various applications 236.

It should be noted that the icon labels illustrated in FIG. 5A are merely exemplary. For example, icon 522 for video and music player module 252 is optionally labeled "Music" or "Music Player." Other labels are, optionally, used for various application icons. In some embodiments, a label for a respective application icon includes a name of an application corresponding to the respective application icon. In some embodiments, a label for a particular application icon is distinct from a name of an application corresponding to the particular application icon.

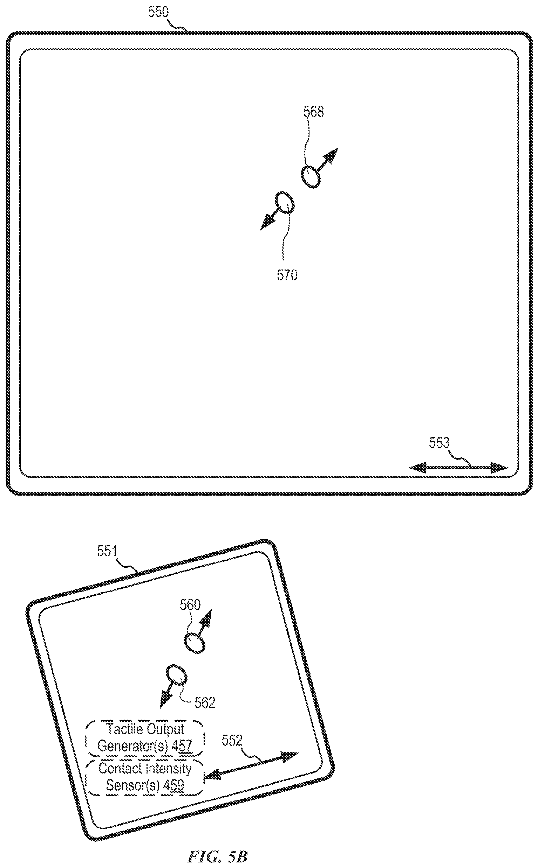

FIG. 5B illustrates an exemplary user interface on a device (e.g., device 400, FIG. 4) with a touch-sensitive surface 551 (e.g., a tablet or touchpad 455, FIG. 4) that is separate from the display 550 (e.g., touch screen display 212). Device 400 also, optionally, includes one or more contact intensity sensors (e.g., one or more of sensors 457) for detecting intensity of contacts on touch-sensitive surface 551 and/or one or more tactile output generators 459 for generating tactile outputs for a user of device 400.

Although some of the examples which follow will be given with reference to inputs on touch screen display 212 (where the touch-sensitive surface and the display are combined), in some embodiments, the device detects inputs on a touch-sensitive surface that is separate from the display, as shown in FIG. 5B. In some embodiments, the touch-sensitive surface (e.g., 551 in FIG. 5B) has a primary axis (e.g., 552 in FIG. 5B) that corresponds to a primary axis (e.g., 553 in FIG. 5B) on the display (e.g., 550). In accordance with these embodiments, the device detects contacts (e.g., 560 and 562 in FIG. 5B) with the touch-sensitive surface 551 at locations that correspond to respective locations on the display (e.g., in FIG. 5B, 560 corresponds to 568 and 562 corresponds to 570). In this way, user inputs (e.g., contacts 560 and 562, and movements thereof) detected by the device on the touch-sensitive surface (e.g., 551 in FIG. 5B) are used by the device to manipulate the user interface on the display (e.g., 550 in FIG. 5B) of the multifunction device when the touch-sensitive surface is separate from the display. It should be understood that similar methods are, optionally, used for other user interfaces described herein.

Additionally, while the following examples are given primarily with reference to finger inputs (e.g., finger contacts, finger tap gestures, finger swipe gestures), it should be understood that, in some embodiments, one or more of the finger inputs are replaced with input from another input device (e.g., a mouse-based input or stylus input). For example, a swipe gesture is, optionally, replaced with a mouse click (e.g., instead of a contact) followed by movement of the cursor along the path of the swipe (e.g., instead of movement of the contact). As another example, a tap gesture is, optionally, replaced with a mouse click while the cursor is located over the location of the tap gesture (e.g., instead of detection of the contact followed by ceasing to detect the contact). Similarly, when multiple user inputs are simultaneously detected, it should be understood that multiple computer mice are, optionally, used simultaneously, or a mouse and finger contacts are, optionally, used simultaneously.

FIG. 6A illustrates exemplary personal electronic device 600. Device 600 includes body 602. In some embodiments, device 600 includes some or all of the features described with respect to devices 200 and 400 (e.g., FIGS. 2A-4). In some embodiments, device 600 has touch-sensitive display screen 604, hereafter touch screen 604. Alternatively, or in addition to touch screen 604, device 600 has a display and a touch-sensitive surface. As with devices 200 and 400, in some embodiments, touch screen 604 (or the touch-sensitive surface) has one or more intensity sensors for detecting intensity of contacts (e.g., touches) being applied. The one or more intensity sensors of touch screen 604 (or the touch-sensitive surface) provide output data that represents the intensity of touches. The user interface of device 600 responds to touches based on their intensity, meaning that touches of different intensities can invoke different user interface operations on device 600.

Techniques for detecting and processing touch intensity are found, for example, in related applications: International Patent Application Serial No. PCT/US2013/040061, titled "Device, Method, and Graphical User Interface for Displaying User Interface Objects Corresponding to an Application," filed May 8, 2013, and International Patent Application Serial No. PCT/US2013/069483, titled "Device, Method, and Graphical User Interface for Transitioning Between Touch Input to Display Output Relationships," filed November 11, 2013.

In some embodiments, device 600 has one or more input mechanisms 606 and 608. Input mechanisms 606 and 608, if included, are physical. Examples of physical input mechanisms include push buttons and rotatable mechanisms. In some embodiments, device 600 has one or more attachment mechanisms. Such attachment mechanisms, if included, can permit attachment of device 600 with, for example, hats, eyewear, earrings, necklaces, shirts, jackets, bracelets, watch straps, chains, trousers, belts, shoes, purses, backpacks, and so forth. These attachment mechanisms permit device 600 to be worn by a user.

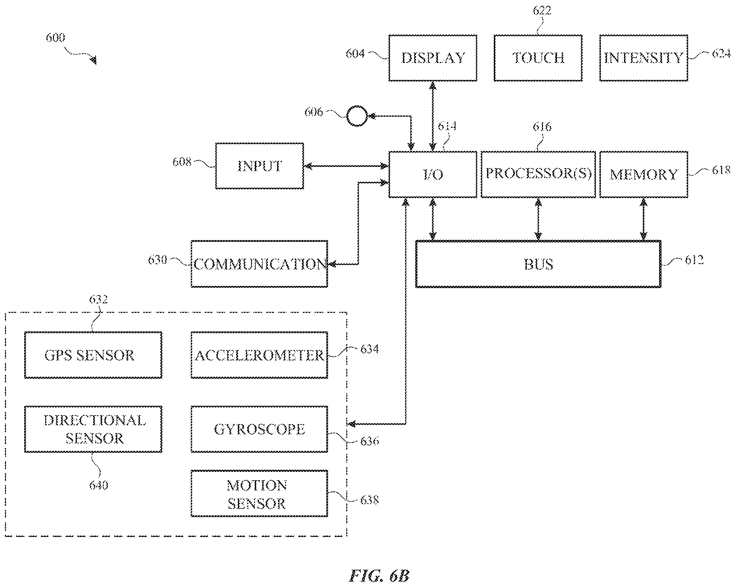

FIG. 6B depicts exemplary personal electronic device 600. In some embodiments, device 600 includes some or all of the components described with respect to FIGS. 2A, 2B, and 4. Device 600 has bus 612 that operatively couples I/O section 614 with one or more computer processors 616 and memory 618. I/O section 614 is connected to display 604, which can have touch-sensitive component 622 and, optionally, touch-intensity sensitive component 624. In addition, I/O section 614 is connected with communication unit 630 for receiving application and operating system data, using Wi-Fi, Bluetooth, near field communication (NFC), cellular, and/or other wireless communication techniques. Device 600 includes input mechanisms 606 and/or 608. Input mechanism 606 is a rotatable input device or a depressible and rotatable input device, for example. Input mechanism 608 is a button, in some examples.

Input mechanism 608 is a microphone, in some examples. Personal electronic device 600 includes, for example, various sensors, such as GPS sensor 632, accelerometer 634, directional sensor 640 (e.g., compass), gyroscope 636, motion sensor 638, and/or a combination thereof, all of which are operatively connected to I/O section 614.

Memory 618 of personal electronic device 600 is a non-transitory computer-readable storage medium, for storing computer-executable instructions, which, when executed by one or more computer processors 616, for example, cause the computer processors to perform the techniques and processes described below. The computer-executable instructions, for example, are also stored and/or transported within any non-transitory computer-readable storage medium for use by or in connection with an instruction execution system, apparatus, or device, such as a computer-based system, processor-containing system, or other system that can fetch the instructions from the instruction execution system, apparatus, or device and execute the instructions. Personal electronic device 600 is not limited to the components and configuration of FIG. 6B, but can include other or additional components in multiple configurations.

As used here, the term "affordance" refers to a user-interactive graphical user interface object that is, for example, displayed on the display screen of devices 200, 400, and/or 600 (FIGS. 2, 4, and 6). For example, an image (e.g., icon), a button, and text (e.g., hyperlink) each constitutes an affordance.

As used herein, the term "focus selector" refers to an input element that indicates a current part of a user interface with which a user is interacting. In some implementations that include a cursor or other location marker, the cursor acts as a "focus selector" so that when an input (e.g., a press input) is detected on a touch-sensitive surface (e.g., touchpad 455 in FIG. 4 or touch-sensitive surface 551 in FIG. 5B) while the cursor is over a particular user interface element (e.g., a button, window, slider or other user interface element), the particular user interface element is adjusted in accordance with the detected input. In some implementations that include a touch screen display (e.g., touch-sensitive display system 212 in FIG. 2A or touch screen 212 in FIG. 5A) that enables direct interaction with user interface elements on the touch screen display, a detected contact on the touch screen acts as a "focus selector" so that when an input (e.g., a press input by the contact) is detected on the touch screen display at a location of a particular user interface element (e.g., a button, window, slider, or other user interface element), the particular user interface element is adjusted in accordance with the detected input. In some implementations, focus is moved from one region of a user interface to another region of the user interface without corresponding movement of a cursor or movement of a contact on a touch screen display (e.g., by using a tab key or arrow keys to move focus from one button to another button); in these implementations, the focus selector moves in accordance with movement of focus between different regions of the user interface. Without regard to the specific form taken by the focus selector, the focus selector is generally the user interface element (or contact on a touch screen display) that is controlled by the user so as to communicate the user's intended interaction with the user interface (e.g., by indicating, to the device, the element of the user interface with which the user is intending to interact). For example, the location of a focus selector (e.g., a cursor, a contact, or a selection box) over a respective button while a press input is detected on the touch-sensitive surface (e.g., a touchpad or touch screen) will indicate that the user is intending to activate the respective button (as opposed to other user interface elements shown on a display of the device).

As used in the specification and claims, the term "characteristic intensity" of a contact refers to a characteristic of the contact based on one or more intensities of the contact. In some embodiments, the characteristic intensity is based on multiple intensity samples. The characteristic intensity is, optionally, based on a predefined number of intensity samples, or a set of intensity samples collected during a predetermined time period (e.g., 0.05, 0.1, 0.2, 0.5, 1, 2, 5, 10 seconds) relative to a predefined event (e.g., after detecting the contact, prior to detecting liftoff of the contact, before or after detecting a start of movement of the contact, prior to detecting an end of the contact, before or after detecting an increase in intensity of the contact, and/or before or after detecting a decrease in intensity of the contact). A characteristic intensity of a contact is, optionally based on one or more of: a maximum value of the intensities of the contact, a mean value of the intensities of the contact, an average value of the intensities of the contact, a top 10 percentile value of the intensities of the contact, a value at the half maximum of the intensities of the contact, a value at the 90 percent maximum of the intensities of the contact, or the like. In some embodiments, the duration of the contact is used in determining the characteristic intensity (e.g., when the characteristic intensity is an average of the intensity of the contact over time). In some embodiments, the characteristic intensity is compared to a set of one or more intensity thresholds to determine whether an operation has been performed by a user. For example, the set of one or more intensity thresholds includes a first intensity threshold and a second intensity threshold. In this example, a contact with a characteristic intensity that does not exceed the first threshold results in a first operation, a contact with a characteristic intensity that exceeds the first intensity threshold and does not exceed the second intensity threshold results in a second operation, and a contact with a characteristic intensity that exceeds the second threshold results in a third operation. In some embodiments, a comparison between the characteristic intensity and one or more thresholds is used to determine whether or not to perform one or more operations (e.g., whether to perform a respective operation or forgo performing the respective operation) rather than being used to determine whether to perform a first operation or a second operation.

In some embodiments, a portion of a gesture is identified for purposes of determining a characteristic intensity. For example, a touch-sensitive surface receives a continuous swipe contact transitioning from a start location and reaching an end location, at which point the intensity of the contact increases. In this example, the characteristic intensity of the contact at the end location is based on only a portion of the continuous swipe contact, and not the entire swipe contact (e.g., only the portion of the swipe contact at the end location). In some embodiments, a smoothing algorithm is applied to the intensities of the swipe contact prior to determining the characteristic intensity of the contact. For example, the smoothing algorithm optionally includes one or more of: an unweighted sliding-average smoothing algorithm, a triangular smoothing algorithm, a median filter smoothing algorithm, and/or an exponential smoothing algorithm. In some circumstances, these smoothing algorithms eliminate narrow spikes or dips in the intensities of the swipe contact for purposes of determining a characteristic intensity.

The intensity of a contact on the touch-sensitive surface is characterized relative to one or more intensity thresholds, such as a contact-detection intensity threshold, a light press intensity threshold, a deep press intensity threshold, and/or one or more other intensity thresholds. In some embodiments, the light press intensity threshold corresponds to an intensity at which the device will perform operations typically associated with clicking a button of a physical mouse or a trackpad. In some embodiments, the deep press intensity threshold corresponds to an intensity at which the device will perform operations that are different from operations typically associated with clicking a button of a physical mouse or a trackpad. In some embodiments, when a contact is detected with a characteristic intensity below the light press intensity threshold (e.g., and above a nominal contact-detection intensity threshold below which the contact is no longer detected), the device will move a focus selector in accordance with movement of the contact on the touch-sensitive surface without performing an operation associated with the light press intensity threshold or the deep press intensity threshold. Generally, unless otherwise stated, these intensity thresholds are consistent between different sets of user interface figures.

An increase of characteristic intensity of the contact from an intensity below the light press intensity threshold to an intensity between the light press intensity threshold and the deep press intensity threshold is sometimes referred to as a "light press" input. An increase of characteristic intensity of the contact from an intensity below the deep press intensity threshold to an intensity above the deep press intensity threshold is sometimes referred to as a "deep press" input. An increase of characteristic intensity of the contact from an intensity below the contact-detection intensity threshold to an intensity between the contact-detection intensity threshold and the light press intensity threshold is sometimes referred to as detecting the contact on the touch-surface. A decrease of characteristic intensity of the contact from an intensity above the contact-detection intensity threshold to an intensity below the contact-detection intensity threshold is sometimes referred to as detecting liftoff of the contact from the touch-surface. In some embodiments, the contact-detection intensity threshold is zero. In some embodiments, the contact-detection intensity threshold is greater than zero.

In some embodiments described herein, one or more operations are performed in response to detecting a gesture that includes a respective press input or in response to detecting the respective press input performed with a respective contact (or a plurality of contacts), where the respective press input is detected based at least in part on detecting an increase in intensity of the contact (or plurality of contacts) above a press-input intensity threshold. In some embodiments, the respective operation is performed in response to detecting the increase in intensity of the respective contact above the press-input intensity threshold (e.g., a "down stroke" of the respective press input). In some embodiments, the press input includes an increase in intensity of the respective contact above the press-input intensity threshold and a subsequent decrease in intensity of the contact below the press-input intensity threshold, and the respective operation is performed in response to detecting the subsequent decrease in intensity of the respective contact below the press-input threshold (e.g., an "up stroke" of the respective press input).

In some embodiments, the device employs intensity hysteresis to avoid accidental inputs sometimes termed "jitter," where the device defines or selects a hysteresis intensity threshold with a predefined relationship to the press-input intensity threshold (e.g., the hysteresis intensity threshold is X intensity units lower than the press-input intensity threshold or the hysteresis intensity threshold is 75%, 90%, or some reasonable proportion of the press-input intensity threshold). Thus, in some embodiments, the press input includes an increase in intensity of the respective contact above the press-input intensity threshold and a subsequent decrease in intensity of the contact below the hysteresis intensity threshold that corresponds to the press-input intensity threshold, and the respective operation is performed in response to detecting the subsequent decrease in intensity of the respective contact below the hysteresis intensity threshold (e.g., an "up stroke" of the respective press input). Similarly, in some embodiments, the press input is detected only when the device detects an increase in intensity of the contact from an intensity at or below the hysteresis intensity threshold to an intensity at or above the press-input intensity threshold and, optionally, a subsequent decrease in intensity of the contact to an intensity at or below the hysteresis intensity, and the respective operation is performed in response to detecting the press input (e.g., the increase in intensity of the contact or the decrease in intensity of the contact, depending on the circumstances).

For ease of explanation, the descriptions of operations performed in response to a press input associated with a press-input intensity threshold or in response to a gesture including the press input are, optionally, triggered in response to detecting either: an increase in intensity of a contact above the press-input intensity threshold, an increase in intensity of a contact from an intensity below the hysteresis intensity threshold to an intensity above the press-input intensity threshold, a decrease in intensity of the contact below the press-input intensity threshold, and/or a decrease in intensity of the contact below the hysteresis intensity threshold corresponding to the press-input intensity threshold. Additionally, in examples where an operation is described as being performed in response to detecting a decrease in intensity of a contact below the press-input intensity threshold, the operation is, optionally, performed in response to detecting a decrease in intensity of the contact below a hysteresis intensity threshold corresponding to, and lower than, the press-input intensity threshold.

### 3. Digital Assistant System

FIG. 7A illustrates a block diagram of digital assistant system 700 in accordance with various examples. In some examples, digital assistant system 700 is implemented on a standalone computer system. In some examples, digital assistant system 700 is distributed across multiple computers. In some examples, some of the modules and functions of the digital assistant are divided into a server portion and a client portion, where the client portion resides on one or more user devices (e.g., devices 104, 122, 200, 400, or 600) and communicates with the server portion (e.g., server system 108) through one or more networks, e.g., as shown in FIG. 1. In some examples, digital assistant system 700 is an implementation of server system 108 (and/or DA server 106) shown in FIG. 1. It should be noted that digital assistant system 700 is only one example of a digital assistant system, and that digital assistant system 700 can have more or fewer components than shown, can combine two or more components, or can have a different configuration or arrangement of the components. The various components shown in FIG. 7A are implemented in hardware, software instructions for execution by one or more processors, firmware, including one or more signal processing and/or application specific integrated circuits, or a combination thereof.

Digital assistant system 700 includes memory 702, one or more processors 704, input/output (I/O) interface 706, and network communications interface 708. These components can communicate with one another over one or more communication buses or signal lines 710.

In some examples, memory 702 includes a non-transitory computer-readable medium, such as high-speed random access memory and/or a non-volatile computer-readable storage medium (e.g., one or more magnetic disk storage devices, flash memory devices, or other non-volatile solid-state memory devices).

In some examples, I/O interface 706 couples input/output devices 716 of digital assistant system 700, such as displays, keyboards, touch screens, and microphones, to user interface module 722. I/O interface 706, in conjunction with user interface module 722, receives user inputs (e.g., voice input, keyboard inputs, touch inputs, etc.) and processes them accordingly. In some examples, e.g., when the digital assistant is implemented on a standalone user device, digital assistant system 700 includes any of the components and I/O communication interfaces described with respect to devices 200, 400, or 600 in FIGS. 2A, 4, 6A-B, respectively. In some examples, digital assistant system 700 represents the server portion of a digital assistant implementation, and can interact with the user through a client-side portion residing on a user device (e.g., devices 104, 200, 400, or 600).

In some examples, the network communications interface 708 includes wired communication port(s) 712 and/or wireless transmission and reception circuitry 714. The wired communication port(s) receives and send communication signals via one or more wired interfaces, e.g., Ethernet, Universal Serial Bus (USB), FIREWIRE, etc. The wireless circuitry 714 receives and sends RF signals and/or optical signals from/to communications networks and other communications devices. The wireless communications use any of a plurality of communications standards, protocols, and technologies, such as GSM, EDGE, CDMA, TDMA, Bluetooth, Wi-Fi, VoIP, Wi-MAX, or any other suitable communication protocol. Network communications interface 708 enables communication between digital assistant system 700 with networks, such as the Internet, an intranet, and/or a wireless network, such as a cellular telephone network, a wireless local area network (LAN), and/or a metropolitan area network (MAN), and other devices.

In some examples, memory 702, or the computer-readable storage media of memory 702, stores programs, modules, instructions, and data structures including all or a subset of: operating system 718, communications module 720, user interface module 722, one or more applications 724, and digital assistant module 726. In particular, memory 702, or the computer-readable storage media of memory 702, stores instructions for performing the processes described below. One or more processors 704 execute these programs, modules, and instructions, and reads/writes from/to the data structures.

Operating system 718 (e.g., Darwin, RTXC, LINUX, UNIX, iOS, OS X, WINDOWS, or an embedded operating system such as VxWorks) includes various software components and/or drivers for controlling and managing general system tasks (e.g., memory management, storage device control, power management, etc.) and facilitates communications between various hardware, firmware, and software components.

Communications module 720 facilitates communications between digital assistant system 700 with other devices over network communications interface 708. For example, communications module 720 communicates with RF circuitry 208 of electronic devices such as devices 200, 400, and 600 shown in FIG. 2A, 4, 6A-B, respectively. Communications module 720 also includes various components for handling data received by wireless circuitry 714 and/or wired communications port 712.

User interface module 722 receives commands and/or inputs from a user via I/O interface 706 (e.g., from a keyboard, touch screen, pointing device, controller, and/or microphone), and generate user interface objects on a display. User interface module 722 also prepares and delivers outputs (e.g., speech, sound, animation, text, icons, vibrations, haptic feedback, light, etc.) to the user via the I/O interface 706 (e.g., through displays, audio channels, speakers, touch-pads, etc.).

Applications 724 include programs and/or modules that are configured to be executed by one or more processors 704. For example, if the digital assistant system is implemented on a standalone user device, applications 724 include user applications, such as games, a calendar application, a navigation application, or an email application. If digital assistant system 700 is implemented on a server, applications 724 include resource management applications, diagnostic applications, or scheduling applications, for example.

Memory 702 also stores digital assistant module 726 (or the server portion of a digital assistant). In some examples, digital assistant module 726 includes the following sub-modules, or a subset or superset thereof: input/output processing module 728, speech-to-text (STT) processing module 730, natural language processing module 732, dialogue flow processing module 734, task flow processing module 736, service processing module 738, speech synthesis processing module 740, belief tracker processing module 766, and policy decision processing module 770. Each of these modules has access to one or more of the following systems or data and models of the digital assistant module 726, or a subset or superset thereof: ontology 760, vocabulary index 744, user data 748, task flow models 754, service models 756, ASR systems 758, belief models 768, and policy models 772.

In some examples, using the processing modules, data, system, and models implemented in digital assistant module 726, the digital assistant can perform at least some of the following: converting speech input into text; identifying a user's intent expressed in a natural language input received from the user; actively eliciting and obtaining information needed to fully infer the user's intent (e.g., by disambiguating words, games, intentions, etc.); determining the task flow for fulfilling the inferred intent; and executing the task flow to fulfill the inferred intent.

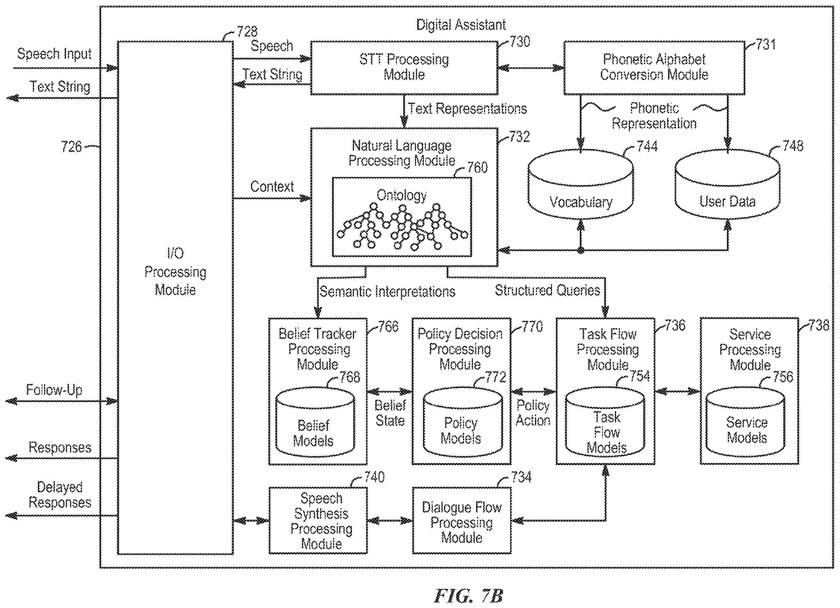

In some examples, as shown in FIG. 7B, I/O processing module 728 interacts with the user through I/O devices 716 in FIG. 7A or with a user device (e.g., devices 104, 200, 400, or 600) through network communications interface 708 in FIG. 7A to obtain user input (e.g., a speech input) and to provide responses (e.g., as speech outputs) to the user input. I/O processing module 728 optionally obtains contextual information associated with the user input from the user device, along with or shortly after the receipt of the user input. The contextual information includes user-specific data, vocabulary, and/or preferences relevant to the user input. In some examples, the contextual information also includes software and hardware states of the user device at the time the user request is received, and/or information related to the surrounding environment of the user at the time that the user request was received. In some examples, I/O processing module 728 also sends follow-up questions to, and receive answers from, the user regarding the user request. When a user request is received by I/O processing module 728 and the user request includes speech input, I/O processing module 728 forwards the speech input to STT processing module 730 (or speech recognizer) for speech-to-text conversions.

STT processing module 730 includes one or more ASR systems 758. The one or more ASR systems can process the speech input (e.g., user utterance) that is received through I/O processing module 728 to produce a recognition result. Each ASR system includes a front-end speech pre-processor. The front-end speech pre-processor extracts representative features from the speech input. For example, the front-end speech pre-processor performs a Fourier transform on the speech input to extract spectral features that characterize the speech input as a sequence of representative multi-dimensional vectors. Further, each ASR system includes one or more speech recognition models (e.g., acoustic models and/or language models) and implements one or more speech recognition engines. Examples of speech recognition models include Hidden Markov Models, Gaussian-Mixture Models, Deep Neural Network Models, n-gram language models, and other statistical models. Examples of speech recognition engines include the dynamic time warping based engines and weighted finite-state transducers (WFST) based engines. The one or more speech recognition models and the one or more speech recognition engines are used to process the extracted representative features of the front-end speech pre-processor to produce intermediate recognitions results (e.g., phonemes, phonemic strings, and sub-words), and ultimately, text recognition results (e.g., words, word strings, or sequence of tokens). In some examples, the speech input is processed at least partially by a third-party service or on the user's device (e.g., device 104, 200, 400, or 600) to produce the recognition result. Once STT processing module 730 produces recognition results containing a text string (e.g., words, or sequence of words, or sequence of tokens), the recognition result is passed to natural language processing module 732 for intent deduction. In some examples, STT processing module 730 produces multiple candidate text representations of the speech input. Each candidate text representation is a sequence of words or tokens corresponding to the speech input. In some examples, each candidate text representation is associated with a speech recognition confidence score. Based on the speech recognition confidence scores, STT processing module 730 ranks the candidate text representations and provides the n-best (e.g., n highest ranked) candidate text representation(s) to natural language processing module 732 for intent deduction, where n is a predetermined integer greater than zero. For example, in one example, only the highest ranked (n=1) candidate text representation is passed to natural language processing module 732 for intent deduction. In another example, the five highest ranked (n=5) candidate text representations are passed to natural language processing module 732 for intent deduction.

More details on the speech-to-text processing are described in U.S. Utility Application Serial No. 13/236,942 for "Consolidating Speech Recognition Results," filed on September 20, 2011.

In some examples, STT processing module 730 includes and/or accesses a vocabulary of recognizable words via phonetic alphabet conversion module 731. Each vocabulary word is associated with one or more candidate pronunciations of the word represented in a speech recognition phonetic alphabet. In particular, the vocabulary of recognizable words includes a word that is associated with a plurality of candidate pronunciations. For example, the vocabulary includes the word "tomato" that is associated with the candidate pronunciations of /t 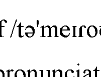 'me 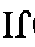 o/ and /ta'matou/. Further, vocabulary words are associated with custom candidate pronunciations that are based on previous speech inputs from the user. Such custom candidate pronunciations are stored in STT processing module 730 and are associated with a particular user via the user's profile on the device. In some examples, the candidate pronunciations for words are determined based on the spelling of the word and one or more linguistic and/or phonetic rules. In some examples, the candidate pronunciations are manually generated, e.g., based on known canonical pronunciations.

In some examples, the candidate pronunciations are ranked based on the commonness of the candidate pronunciation. For example, the candidate pronunciation /t 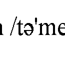 'me 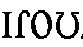 / is ranked higher than /t 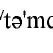 'm 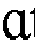 to 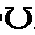 /, because the former is a more commonly used pronunciation (e.g., among all users, for users in a particular geographical region, or for any other appropriate subset of users). In some examples, candidate pronunciations are ranked based on whether the candidate pronunciation is a custom candidate pronunciation associated with the user. For example, custom candidate pronunciations are ranked higher than canonical candidate pronunciations. This can be useful for recognizing proper nouns having a unique pronunciation that deviates from canonical pronunciation. In some examples, candidate pronunciations are associated with one or more speech characteristics, such as geographic origin, nationality, or ethnicity. For example, the candidate pronunciation/t 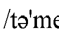 'me 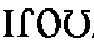 / is associated with the United States, whereas the candidate pronunciation /ta'matou/ is associated with Great Britain. Further, the rank of the candidate pronunciation is based on one or more characteristics (e.g., geographic origin, nationality, ethnicity, etc.) of the user stored in the user's profile on the device. For example, it can be determined from the user's profile that the user is associated with the United States. Based on the user being associated with the United States, the candidate pronunciation /t 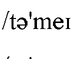 'me 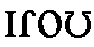 / (associated with the United States) is ranked higher than the candidate pronunciation /t 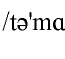 'm 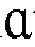 to 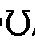 / (associated with Great Britain). In some examples, one of the ranked candidate pronunciations is selected as a predicted pronunciation (e.g., the most likely pronunciation).

When a speech input is received, STT processing module 730 is used to determine the phonemes corresponding to the speech input (e.g., using an acoustic model), and then attempt to determine words that match the phonemes (e.g., using a language model). For example, if STT processing module 730 first identifies the sequence of phonemes /t 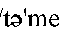 'me 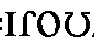 / corresponding to a portion of the speech input, it can then determine, based on vocabulary index 744, that this sequence corresponds to the word "tomato."

In some examples, STT processing module 730 uses approximate matching techniques to determine words in an utterance. Thus, for example, the STT processing module 730 determines that the sequence of phonemes /t 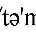 'me 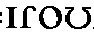 / corresponds to the word "tomato," even if that particular sequence of phonemes is not one of the candidate sequence of phonemes for that word.

Natural language processing module 732 ("natural language processor") of the digital assistant takes the n-best candidate text representation(s) ("word sequence(s)" or "token sequence(s)") generated by STT processing module 730, and attempts to associate each of the candidate text representations with one or more "actionable intents" recognized by the digital assistant. In some examples, an "actionable intent" (or "user intent") represents a task that can be performed by the digital assistant, and can have an associated task flow implemented in task flow models 754. The associated task flow is a series of programmed actions and steps that the digital assistant takes in order to perform the task. The scope of a digital assistant's capabilities is dependent on the number and variety of task flows that have been implemented and stored in task flow models 754, or in other words, on the number and variety of "actionable intents" that the digital assistant recognizes. The effectiveness of the digital assistant, however, also dependents on the assistant's ability to infer the correct "actionable intent(s)" from the user request expressed in natural language.

In some examples, in addition to the sequence of words or tokens obtained from STT processing module 730, natural language processing module 732 also receives contextual information associated with the user request, e.g., from I/O processing module 728. The natural language processing module 732 optionally uses the contextual information to clarify, supplement, and/or further define the information contained in the candidate text representations received from STT processing module 730. The contextual information includes, for example, user preferences, hardware, and/or software states of the user device, sensor information collected before, during, or shortly after the user request, prior interactions (e.g., dialogue) between the digital assistant and the user, and the like. As described herein, contextual information is, in some examples, dynamic, and changes with time, location, content of the dialogue, and other factors.

In some examples, the natural language processing is based on, e.g., ontology 760. Ontology 760 is a hierarchical structure containing many nodes, each node representing either an "actionable intent" or a "property" relevant to one or more of the "actionable intents" or other "properties." As noted above, an "actionable intent" represents a task that the digital assistant is capable of performing, i.e., it is "actionable" or can be acted on. A "property" represents a parameter associated with an actionable intent or a sub-aspect of another property. A linkage between an actionable intent node and a property node in ontology 760 defines how a parameter represented by the property node pertains to the task represented by the actionable intent node.

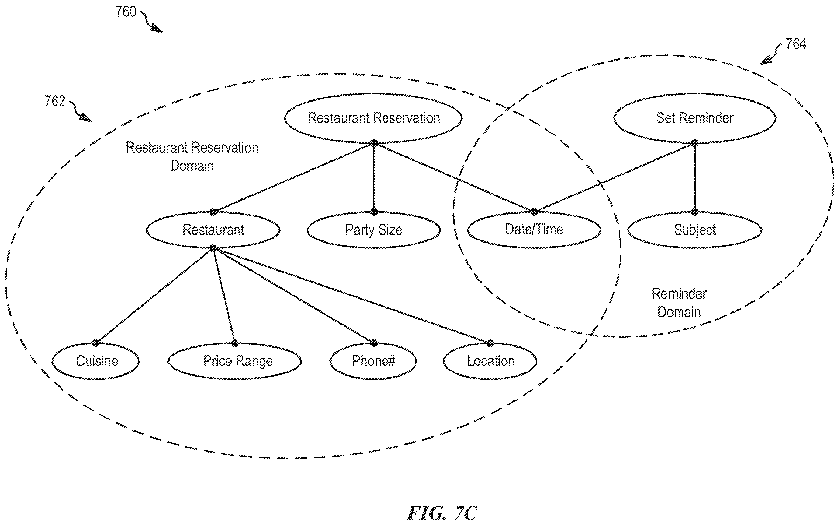

In some examples, ontology 760 is made up of actionable intent nodes and property nodes. Within ontology 760, each actionable intent node is linked to one or more property nodes either directly or through one or more intermediate property nodes. Similarly, each property node is linked to one or more actionable intent nodes either directly or through one or more intermediate property nodes. For example, as shown in FIG. 7C, ontology 760 includes a "restaurant reservation" node (i.e., an actionable intent node). Property nodes "restaurant," "date/time" (for the reservation), and "party size" are each directly linked to the actionable intent node (i.e., the "restaurant reservation" node).

In addition, property nodes "cuisine," "price range," "phone number," and "location" are sub-nodes of the property node "restaurant," and are each linked to the "restaurant reservation" node (i.e., the actionable intent node) through the intermediate property node "restaurant." For another example, as shown in FIG. 7C, ontology 760 also includes a "set reminder" node (i.e., another actionable intent node). Property nodes "date/time" (for setting the reminder) and "subject" (for the reminder) are each linked to the "set reminder" node. Since the property "date/time" is relevant to both the task of making a restaurant reservation and the task of setting a reminder, the property node "date/time" is linked to both the "restaurant reservation" node and the "set reminder" node in ontology 760.

An actionable intent node is described as a "domain." Actionable intents (or domains" can also be referred to as "concepts." In the present discussion, each domain is associated with a respective actionable intent, and refers to the group of nodes (and the relationships there between) associated with the particular actionable intent. For example, ontology 760 shown in FIG. 7C includes an example of restaurant reservation domain 762 and an example of reminder domain 764 within ontology 760. The restaurant reservation domain includes the actionable intent node "restaurant reservation," property nodes "restaurant," "date/time," and "party size," and sub-property nodes "cuisine," "price range," "phone number," and "location." Reminder domain 764 includes the actionable intent node "set reminder," and property nodes "subject" and "date/time." In some examples, ontology 760 is made up of many domains. Each domain shares one or more property nodes with one or more other domains. For example, the "date/time" property node is associated with many different domains (e.g., a scheduling domain, a travel reservation domain, a movie ticket domain, etc.), in addition to restaurant reservation domain 762 and reminder domain 764.

While FIG. 7C illustrates two example domains within ontology 760, other domains include, for example, "find a movie," "initiate a phone call," "find directions," "schedule a meeting," "send a message," "search the web," "provide an answer to a question," "read a list," "providing navigation instructions," "provide instructions for a task" and so on. A "send a message" domain is associated with a "send a message" actionable intent node, and further includes property nodes such as "recipient(s)," "message type," and "message body." The property node "recipient" is further defined, for example, by the sub-property nodes such as "recipient name" and "message address."

In some examples, ontology 760 includes all the domains (and hence actionable intents) that the digital assistant is capable of understanding and acting upon. In some examples, ontology 760 is modified, such as by adding or removing entire domains or nodes, or by modifying relationships between the nodes within the ontology 760.

In some examples, nodes associated with multiple related actionable intents are clustered under a "super-domain" in ontology 760. For example, a "travel" super-domain includes a cluster of property nodes and actionable intent nodes related to travel. The actionable intent nodes related to travel includes "airline reservation," "hotel reservation," "car rental," "get directions," "find points of interest," and so on. Other examples of "super-domain" includes "calendar," "movies," "music," and "maps," which can each include multiple actionable intent nodes (e.g., "search movie show times," "search movie reviews," "search calendar events," or "create calendar event). The actionable intent nodes under the same super-domain (e.g., the "travel" super-domain) have many property nodes in common. For example, the actionable intent nodes for "airline reservation," "hotel reservation," "car rental," "get directions," and "find points of interest" share one or more of the property nodes "start location," "destination," "departure date/time," "arrival date/time," and "party size."

In some examples, each node in ontology 760 is associated with a set of words and/or phrases that are relevant to the property or actionable intent represented by the node. The respective set of words and/or phrases associated with each node are the so-called "vocabulary" associated with the node. The respective set of words and/or phrases associated with each node are stored in vocabulary index 744 in association with the property or actionable intent represented by the node. For example, returning to FIG. 7B, the vocabulary associated with the node for the property of "restaurant" includes words such as "food," "drinks," "cuisine," "hungry," "eat," "pizza," "fast food," "meal," and so on. For another example, the vocabulary associated with the node for the actionable intent of "initiate a phone call" includes words and phrases such as "call," "phone," "dial," "ring," "call this number," "make a call to," and so on. The vocabulary index 744 optionally includes words and phrases in different languages.

Natural language processing module 732 receives the candidate text representations (e.g., text string(s) or token sequence(s)) from STT processing module 730, and for each candidate representation, determines what nodes are implicated by the words in the candidate text representation. In some examples, if a word or phrase in the candidate text representation is found to be associated with one or more nodes in ontology 760 (via vocabulary index 744), the word or phrase "triggers" or "activates" those nodes. Based on the quantity and/or relative importance of the activated nodes, natural language processing module 732 selects one of the actionable intents as the task that the user intended the digital assistant to perform. In some examples, the domain that has the most "triggered" nodes is selected. In some examples, the domain having the highest confidence value (e.g., based on the relative importance of its various triggered nodes) is selected. In some examples, the domain is selected based on a combination of the number and the importance of the triggered nodes. In some examples, additional factors are considered in selecting the node as well, such as whether the digital assistant has previously correctly interpreted a similar request from a user.

User data 748 includes user-specific information, such as user-specific vocabulary, user preferences, user address, user's default and secondary languages, user's contact list, and other short-term or long-term information for each user. In some examples, natural language processing module 732 uses the user-specific information to supplement the information contained in the user input to further define the user intent. For example, for a user request "invite my friends to my birthday party," natural language processing module 732 is able to access user data 748 to determine who the "friends" are and when and where the "birthday party" would be held, rather than requiring the user to provide such information explicitly in his/her request.

It should be recognized that in some examples, natural language processing module 732 is implemented using one or more machine learning mechanisms (e.g., neural networks). In particular, the one or more machine learning mechanisms are configured to receive a candidate text representation and contextual information associated with the candidate text representation. Based on the candidate text representation and the associated contextual information, the one or more machine learning mechanism are configured to determine intent confidence scores over a set of candidate actionable intents. Natural language processing module 732 can select one or more candidate actionable intents from the set of candidate actionable intents based on the determined intent confidence scores. In some examples, an ontology (e.g., ontology 760) is also used to select the one or more candidate actionable intents from the set of candidate actionable intents.

Other details of searching an ontology based on a token string are described in U.S. Utility Application Serial No. 12/341,743 for "Method and Apparatus for Searching Using An Active Ontology," filed December 22, 2008.

In some examples, once natural language processing module 732 identifies an actionable intent (or domain) based on the user request, natural language processing module 732 generates a structured query to represent the identified actionable intent. In some examples, the structured query includes parameters for one or more nodes within the domain for the actionable intent, and at least some of the parameters are populated with the specific information and requirements specified in the user request. For example, the user says "Make me a dinner reservation at a sushi place at 7." In this case, natural language processing module 732 is able to correctly identify the actionable intent to be "restaurant reservation" based on the user input. According to the ontology, a structured query for a "restaurant reservation" domain includes parameters such as {Cuisine}, {Time}, {Date}, {Party Size}, and the like. In some examples, based on the speech input and the text derived from the speech input using STT processing module 730, natural language processing module 732 generates a partial structured query for the restaurant reservation domain, where the partial structured query includes the parameters {Cuisine = "Sushi"} and {Time = "7pm"}. However, in this example, the user's utterance contains insufficient information to complete the structured query associated with the domain. Therefore, other necessary parameters such as {Party Size} and {Date} is not specified in the structured query based on the information currently available. In some examples, natural language processing module 732 populates some parameters of the structured query with received contextual information. For example, in some examples, if the user requested a sushi restaurant "near me," natural language processing module 732 populates a {location} parameter in the structured query with GPS coordinates from the user device.

In some examples, natural language processing module 732 identifies multiple candidate actionable intents for each candidate text representation received from STT processing module 730. Further, in some examples, a respective structured query (partial or complete) is generated for each identified candidate actionable intent. Natural language processing module 732 determines an intent confidence score for each candidate actionable intent and ranks the candidate actionable intents based on the intent confidence scores. In some examples, natural language processing module 732 passes the generated structured query (or queries), including any completed parameters, to task flow processing module 736 ("task flow processor"). In some examples, the structured query (or queries) for the m-best (e.g., m highest ranked) candidate actionable intents are provided to task flow processing module 736, where m is a predetermined integer greater than zero. In some examples, the structured query (or queries) for the m-best candidate actionable intents are provided to task flow processing module 736 with the corresponding candidate text representation(s).

Other details of inferring a user intent based on multiple candidate actionable intents determined from multiple candidate text representations of a speech input are described in U.S. Utility Application Serial No. 14/298,725 for "System and Method for Inferring User Intent From Speech Inputs," filed June 6, 2014.

Task flow processing module 736 is configured to receive the structured query (or queries) from natural language processing module 732, complete the structured query, if necessary, and perform the actions required to "complete" the user's ultimate request. In some examples, the various procedures necessary to complete these tasks are provided in task flow models 754. In some examples, task flow models 754 include procedures for obtaining additional information from the user and task flows for performing actions associated with the actionable intent.

As described above, in order to complete a structured query, task flow processing module 736 needs to initiate additional dialogue with the user in order to obtain additional information, and/or disambiguate potentially ambiguous utterances. When such interactions are necessary, task flow processing module 736 invokes dialogue flow processing module 734 to engage in a dialogue with the user. In some examples, dialogue flow processing module 734 determines how (and/or when) to ask the user for the additional information and receives and processes the user responses. The questions are provided to and answers are received from the users through I/O processing module 728. In some examples, dialogue flow processing module 734 presents dialogue output to the user via audio and/or visual output, and receives input from the user via spoken or physical (e.g., clicking) responses. Continuing with the example above, when task flow processing module 736 invokes dialogue flow processing module 734 to determine the "party size" and "date" information for the structured query associated with the domain "restaurant reservation," dialogue flow processing module 734 generates questions such as "For how many people?" and "On which day?" to pass to the user. Once answers are received from the user, dialogue flow processing module 734 then populates the structured query with the missing information, or pass the information to task flow processing module 736 to complete the missing information from the structured query.

Once task flow processing module 736 has completed the structured query for an actionable intent, task flow processing module 736 proceeds to perform the ultimate task associated with the actionable intent. Accordingly, task flow processing module 736 executes the steps and instructions in the task flow model according to the specific parameters contained in the structured query. For example, the task flow model for the actionable intent of "restaurant reservation" includes steps and instructions for contacting a restaurant and actually requesting a reservation for a particular party size at a particular time. For example, using a structured query such as: {restaurant reservation, restaurant = ABC Cafe, date = 3/12/2012, time = 7pm, party size = 5}, task flow processing module 736 performs the steps of: (1) logging onto a server of the ABC Cafe or a restaurant reservation system such as OPENTABLE^{®}, (2) entering the date, time, and party size information in a form on the website, (3) submitting the form, and (4) making a calendar entry for the reservation in the user's calendar.

In some examples, task flow processing module 736 employs the assistance of service processing module 738 ("service processing module") to complete a task requested in the user input or to provide an informational answer requested in the user input. For example, service processing module 738 acts on behalf of task flow processing module 736 to make a phone call, set a calendar entry, invoke a map search, invoke or interact with other user applications installed on the user device, and invoke or interact with third-party services (e.g., a restaurant reservation portal, a social networking website, a banking portal, etc.). In some examples, the protocols and application programming interfaces (API) required by each service are specified by a respective service model among service models 756. Service processing module 738 accesses the appropriate service model for a service and generate requests for the service in accordance with the protocols and APIs required by the service according to the service model.

For example, if a restaurant has enabled an online reservation service, the restaurant submits a service model specifying the necessary parameters for making a reservation and the APIs for communicating the values of the necessary parameter to the online reservation service. When requested by task flow processing module 736, service processing module 738 establishes a network connection with the online reservation service using the web address stored in the service model, and send the necessary parameters of the reservation (e.g., time, date, party size) to the online reservation interface in a format according to the API of the online reservation service.

In some examples, natural language processing module 732, dialogue flow processing module 734, and task flow processing module 736 are used collectively and iteratively to infer and define the user's intent, obtain information to further clarify and refine the user intent, and finally generate a response (i.e., an output to the user, or the completion of a task) to fulfill the user's intent. The generated response is a dialogue response to the speech input that at least partially fulfills the user's intent. Further, in some examples, the generated response is output as a speech output. In these examples, the generated response is sent to speech synthesis processing module 740 (e.g., speech synthesizer) where it can be processed to synthesize the dialogue response in speech form. In yet other examples, the generated response is data content relevant to satisfying a user request in the speech input.

In examples where task flow processing module 736 receives multiple structured queries from natural language processing module 732, task flow processing module 736 initially processes the first structured query of the received structured queries to attempt to complete the first structured query and/or execute one or more tasks or actions represented by the first structured query. In some examples, the first structured query corresponds to the highest ranked actionable intent. In other examples, the first structured query is selected from the received structured queries based on a combination of the corresponding speech recognition confidence scores and the corresponding intent confidence scores. In some examples, if task flow processing module 736 encounters an error during processing of the first structured query (e.g., due to an inability to determine a necessary parameter), the task flow processing module 736 can proceed to select and process a second structured query of the received structured queries that corresponds to a lower ranked actionable intent. The second structured query is selected, for example, based on the speech recognition confidence score of the corresponding candidate text representation, the intent confidence score of the corresponding candidate actionable intent, a missing necessary parameter in the first structured query, or any combination thereof.

Speech synthesis processing module 740 is configured to synthesize speech outputs for presentation to the user. Speech synthesis processing module 740 synthesizes speech outputs based on text provided by the digital assistant. For example, the generated dialogue response is in the form of a text string. Speech synthesis processing module 740 converts the text string to an audible speech output. Speech synthesis processing module 740 uses any appropriate speech synthesis technique in order to generate speech outputs from text, including, but not limited, to concatenative synthesis, unit selection synthesis, diphone synthesis, domain-specific synthesis, formant synthesis, articulatory synthesis, hidden Markov model (HMM) based synthesis, and sinewave synthesis. In some examples, speech synthesis processing module 740 is configured to synthesize individual words based on phonemic strings corresponding to the words. For example, a phonemic string is associated with a word in the generated dialogue response. The phonemic string is stored in metadata associated with the word. Speech synthesis processing module 740 is configured to directly process the phonemic string in the metadata to synthesize the word in speech form.

In some examples, instead of (or in addition to) using speech synthesis processing module 740, speech synthesis is performed on a remote device (e.g., the server system 108), and the synthesized speech is sent to the user device for output to the user. For example, this can occur in some implementations where outputs for a digital assistant are generated at a server system. And because server systems generally have more processing power or resources than a user device, it is possible to obtain higher quality speech outputs than would be practical with client-side synthesis.

Additional details on digital assistants can be found in the U.S. Utility Application No. 12/987,982, entitled "Intelligent Automated Assistant," filed January 10, 2011, and U.S. Utility Application No. 13/251,088, entitled "Generating and Processing Task Items That Represent Tasks to Perform," filed September 30, 2011.

Referring back to FIG. 7B, in some examples, digital assistant module 726 receives a user utterance. The user utterance is, for example, one turn of a multi-turn dialogue conversation between the user and digital assistant system 700. STT processing module 730 determines one or more candidate text representations corresponding to the user utterance and provides the one or more candidate text representations to natural language processing module 732. Natural language processing module 732, using ontology 760, vocabulary 744, and user data 748, parses each candidate text representation from STT processing module 730 to determine semantic interpretations for the candidate text representation. The semantic interpretations include, for example, one or more candidate user intents. Specifically, the semantic interpretations include candidate domains (and/or candidate super-domains) and candidate parse interpretations for the candidate text representation. In some examples, the semantic interpretations comprise an internal representation (e.g., vector representation) of the candidate domains and candidate parse interpretations for the one or more candidate text representations. For instance, in one example, natural language processing module 732 parses the candidate text representation "Directions to Fidelity investments" for a corresponding user utterance to determine candidate domains and candidate parse interpretations. In this example, the candidate domains determined for this candidate text representation can include the "get directions" domain and the "search the web" domain. The candidate parse interpretations for this candidate text representation include interpreting "Fidelity investments" as a value for the "contacts" property, the "business" property, or the "address" property of the "get directions" domain.

In another example, natural language processing module 732 parses the candidate text representation "Reviews for Frozen" for a corresponding user utterance. In this example, the candidate domains determined for this candidate text representation can include the "search movies" domain, the "search restaurants" domain, and the "search music" domain. In addition, the candidate parse interpretations for this candidate text representation can include interpreting "Frozen" as a value for the "movie title" property, the "restaurant name" property, or the "album name" property for the respective candidate domains.

In some examples, natural language processing module 732 identifies from the one or more candidate text representations concepts and/or properties that have joint relationships. For instance, in one example, natural language processing module 732 parses the candidate text representation "I want a meeting for two days from the 23^{rd}" for a corresponding user utterance. In this example, natural language processing module 732 determines that this candidate text representation relates to the "calendar" candidate super-domain and two candidate actionable intents: "create event" and "search event." Natural language processing module 732 also determines two candidate parse interpretations for the phrase "two days from the 23^{rd}." One candidate interpretation includes the "day" property for the calendar event having a value of "25." A second candidate interpretation includes the "duration" and "day" properties for the calendar event having the values "2 days" and "23," respectively. For the second interpretation, natural language processing module 732 can further determine that the "duration" property and the "day" property interact in a joint manner.

Natural language processing module 732 provides the semantic interpretations (e.g., the candidate domains and the candidate parse interpretations) for the one or more candidate text representations to belief tracker processing module 766. Associated confidence scores for each of the semantic interpretations are also provided to belief tracker processing module 766. In addition, natural language processing module 732 provides identified joint relationships between concepts and/or properties to belief tracker processing module 766. Using the semantic interpretations, the associated confidence scores, and the identified joint relationships, belief tracker processing module 766 determines a current belief state.

The belief state (according to a feature claimed) is an internal representation of the relevant candidate user intents (e.g., the n-best user intents) that correspond to the user utterance. The belief state describes the current state of the dialogue given previous and current observations of the dialogue. In particular, the belief state represents the distribution over the possible states of the dialogue. The observations include, for example, speech recognition results (e.g., candidate text representations and associated speech recognition confidence scores) from STT processing module 730 and natural language processing results (e.g., candidate user intents, semantic interpretations, associated intent confidence scores, and joint relationships) from natural language processing module 732. In some examples, the observations further include contextual information (context data) associated with the current user utterances and/or previous user utterances in the dialogue conversation. Thus, in some examples, belief tracker processing module 766 further utilizes contextual information, information from the dialogue history (e.g., previous utterances in the dialogue conversation), previous belief states, or any combination thereof to determine the current belief state. The previous belief state is the internal representation of the previous state of the dialogue based on one or more user utterances of the dialogue conversation received prior to the current user utterance. The observations can be represented in individual dialogue slots of the belief state. In some examples, some dialogue slots of the belief state represent information that is required to fulfill the respective user intent.

Belief tracker processing module 766 generates the belief state using belief models 768. In some examples, belief models 768 consider the candidate user intents and other aspects of the environment as partially observable random variables inferred from observations. For example, belief models 768 determine certainty distributions (e.g., probability distributions) over the random variables using Bayesian networks. In some examples, belief models 768 include one or more machine learning mechanisms (e.g., neural networks). In some examples, the belief state is implemented using partially observable Markov decision processes (POMDPs), which can track user intents over each turn of the dialogue conversation. The POMDPs can maintain the certainty distributions over a set of states based on previous and current observations, and update the certainty distributions based on each subsequent observation (e.g., subsequent user utterance).

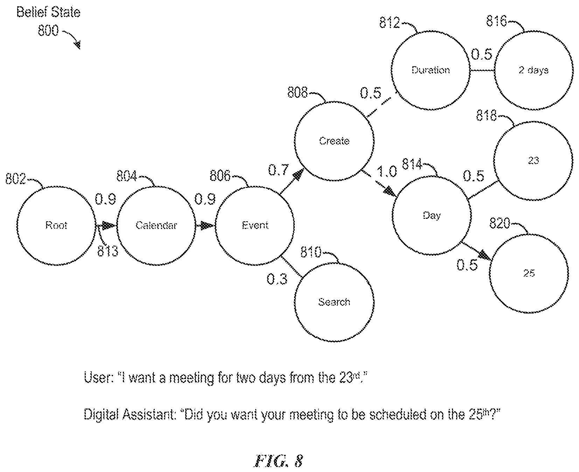

FIG. 8 illustrates a portion of belief state 800, according to various examples. Belief state 800 is generated, for example, using belief tracker processing module 766, and represents candidate user intents (user goals) for the user utterance "I want a meeting for two days from the 23^{rd}" As shown in FIG. 8, belief state 800 includes a plurality of dialogue slots (e.g., dialogue slot 802) that are arranged in a hierarchical tree structure. Each dialogue slot is connected (e.g., by connections 813) to at least one other dialogue slot.

Each dialogue slot of belief state 800 represents a relevant variable (e.g., concepts or properties) based on knowledge obtained from observations (e.g., speech recognition results, natural language processing results, context data, etc.) of the dialogue. In some examples, each dialogue slot (according to a feature claimed) represents no more than one concept or property. In the present example, as discussed above, natural language processing module 732 can determine that the candidate text representation "I want a meeting for two days from the 23^{rd}" relates to the "calendar" super-domain, the "create event" and "search event" actionable intents, and two parse interpretations related to the "duration" property and the "day" property. Using these semantic interpretations from natural language processing module 732, belief tracker processing module 766 constructs belief state 800 to represent the current state of the dialogue. As shown in FIG. 8, the "calendar" super-domain is represented by dialogue slot 804. The "create event" and "search event" actionable intents are represented by dialogue slots 806, 808, and 810. Further, the "duration" and "day" properties are represented by dialogue slots 812 and 814, respectively. Dialogue slots 812 and 814 further include terminal nodes 816, 818, and 820 representing the variable possible values taken by the properties of dialogue slots 812 and 814.

It should be recognized that, for simplicity, some dialogue slots of belief state 800 have been omitted from FIG. 8. For examples, belief state 800 can include additional dialogue slots (not shown) that descend from dialogue slot 810. These additional dialogue slots can be similar to dialogue slots 812 and 814 and can represent one or more calendar event properties for searching a calendar event.

In some examples, the possible values represented by terminal nodes 816, 818, and 820 are obtained from respective portions of the one or more candidate text representations. For instance, in the present example, the possible values represented by terminal nodes 816, 818, and 820 are obtained from the portion "two days from the 23^{rd}" of the candidate text representation "I want a meeting for two days from the 23^{rd}." In other examples, the possible values represented by the terminal nodes of a belief state can be obtained from multiple portions of candidate text representations. In one such example, the user utterance can be "Call Steve Young." In this example, two different candidate text representations: "Call Steve Young" and "Call Steve Yeon" can be determined from the user utterance. A belief state generated from the two candidate text representations can include a dialogue slot representing the "last name" property. The dialogue slot can include terminal nodes that represent a first possible value "Young" from the first candidate text representation "Call Steve Young" and a second possible value "Yeon" from the second candidate text representation "Call Steve Yeon".

As discussed above, natural language processing module 732 uses ontology 760 to determine one or more candidate user intents for the user utterance. Ontology 760 is a hierarchical structure containing many nodes. Each node of ontology 760 represents either an actionable intent or a property relevant to one or more actionable intents or another property. In some examples, the dialogue slots of belief state 800 can correspond to respective nodes of ontology 760. More specifically, the domains, actionable intents, and/or properties represented by the dialogue slots of belief state 800 can correspond to respective domains, actionable intents, and/or properties represented by respective nodes of ontology 760. In some examples, belief tracker processing module 766 generates belief state 800 using ontology 760. In particular, the plurality of dialogue slots of belief state 800 are arranged in a hierarchical tree structure that is similar or substantially identical to the hierarchical tree structure of a plurality of corresponding nodes in ontology 760. For example, ontology 760 can have nodes representing the "calendar" super-domain, the "create event" and "search event" actionable intents, and the "duration" and "day" properties. In addition, these nodes can be hierarchically arranged in a similar or substantially identical manner in ontology 760 as belief state 800.

Although at least some of the dialogue slots of belief state 800 can represent similar or identical concepts or properties as respective nodes in ontology 760, it should be recognized that, in some examples, belief state 800 may not include all concepts and properties represented in ontology 760. In particular, policy determination (e.g., at policy decision processing module 770) would be intractable if all candidate user intents from ontology 760 were represented in belief state 800. Rather, in some examples, belief tracker processing module 766 constructs belief state 800 based on only a subset of the nodes in ontology 760 that represent the most relevant candidate user intents given the one or more candidate text representations of the user utterance. A compact representation of belief state 800 that embodies only the most relevant domains (e.g., n-best user intents) can enable tractable policy algorithms for policy decision processing module 770.

In some examples, different branches of dialogue slots in belief state 800 represent different candidate user intents or goals for the user utterance. For example, in FIG. 8, the branch of belief state 800 containing dialogue slots 802, 804, 806, 808, and 814 and terminal node 820 (highlighted by arrows) can represent the candidate user intent of creating a calendar event for the day of the 25^{th}. A separate branch of belief state 800 containing dialogue slots 802, 804, 806, 808, 812, and 814 and terminal nodes 816 and 818 can represent the candidate user intent of creating a calendar event for the day of the 23^{rd} and for a duration of two days.

Belief state 800 includes (according to an aspect claimed) certainty information for the concepts and/or properties represented by its dialogue slots. Each dialogue slot of belief state 800 includes a respective marginal certainty (e.g., marginal probability, marginal likelihood, or marginal expectation) for a concept or property represented by the respective dialogue slot. The marginal certainty for a concept or property represented by the respective dialogue slot is the likelihood that the concept or property is correct given the observations for the dialogue. For example, as shown in FIG. 8, dialogue slot 804 includes the marginal certainty 0.9, which is the likelihood that the "calendar" super-domain is the correct super-domain given the current observations for the dialogue. Other candidate super-domains can include "travel" or "movies," which can each be represented by a separate dialogue slot (not shown) having a marginal certainty of 0.05, for example. Similarly, dialogue slots 808 and 810 include marginal certainties of 0.7 and 0.3, respectively, which are each the likelihood that the respective actionable intent ("create event" or "search event") is the correct actionable intent for the "calendar" super-domain given the observations for the dialogue. Further, dialogue slots 812 and 814 include the marginal certainties 0.5 and 1, respectively, which are the likelihoods that the respective properties ("duration" and "day") are the correct properties for the "create event" actionable intent given the observations for the dialogue.

In some examples, one or more dialogue slots of belief state 800 include a certainty distribution (e.g., probability distribution) over the possible values for a concept or property represented by the respective dialogue slot. For instance, in the present example, dialogue slot 814 includes a certainty distribution over the possible values for the "day" property. In this example, the possible values taken by the "day" property include "23" and "25" (represented by terminal nodes 818 and 820) and the certainty for each of the possible values is 0.5.

Further, in accordance with the invention claimed, one or more dialogue slots of belief state 800 further include one or more joint certainties for one or more interpretations arising from the respective dialogue slot. The joint certainties consequently are included only for dialogue slots representing concepts or properties that interact in a joint manner (e.g., as identified by natural language processing module 732). For instance, in the present example, natural language processing module 732 determines, from the candidate text representations, two candidate interpretations related to creating a calendar event. The first interpretation includes only the "day" property taking on the value "25." The second parse interpretation includes the "duration" and "day" properties having a joint relationship and taking the values "2 days" and "23," respectively. In this example, the two interpretations (also referred to as "hypotheses") are encoded in dialogue slot 808 from which the relevant properties ("duration" and "day") directly descend. Dialogue slot 808 further includes a certainty distribution over the two candidate interpretations. Specifically, the certainty distribution includes the certainty of 0.5 for the first interpretation ("day" = 25) and the certainty of "0.5" for the second interpretation ("duration" = 2 and "day" = 23). The certainty for the second interpretation is the joint certainty of having both the "duration" and "day" properties.

In some examples, the one or more joint certainties are included in the lowest dialogue slot in the hierarchical tree structure from which dialogue slots representing the jointly related concepts or properties in the respective interpretations descend. Specifically, for example, the jointly related properties ("duration" and "day") in the second interpretation are represented by dialogue slots 812 and 814 and the lowest dialogue slot in belief state 800 from which dialogue slots 812 and 814 descend is dialogue slot 808. Thus, in this example, the joint certainty for the second interpretation is included in dialogue slot 808.

It should be appreciated that, in this example, the joint certainty for the second interpretation does not include any concept or property represented by an ancestor slot of dialogue slot 808 (e.g., dialogue slots 802, 804, and 806). For example, the joint certainty of the second interpretation is not a joint probability of all concepts and properties represented by dialogue slots 802, 804, 806, 808, 812, and 814. Rather, the joint certainty of the second interpretation is only with respect to the properties of dialogue slots 812 and 814 that descend directly from dialogue slot 808. Thus, in the present example, the joint certainty of the second interpretation is included in dialogue slot 808 and not in any of the related ancestor dialogue slots (e.g., dialogue slot 802, 804, or 806).

In some examples, the marginal certainties, the certainty distributions, and/or the joint certainties of the dialogue slots are determined based on speech recognition confidence scores obtained from STT processing module 730 and/or intent confidence scores obtained from natural language processing module 732.

According to an implementation of the invention claimed, the belief tracker processing module 766 provides the belief state to policy decision processing module 770. Using policy models 772, policy decision processing module 770 maps the belief state to a plurality of candidate policy actions. Each candidate policy action represents a set of one or more actions to be performed by the device to satisfy one or more candidate user intents represented by the belief state. The set of one or more actions includes, for example, the actions of generating and outputting suitable dialogue that is responsive to the user utterance. In some examples, the set of one or more actions represented by a candidate policy action is a predetermined set of one or more actions. Further, in some examples, the plurality of candidate policy actions are a subset of all possible policy actions represented by policy models 772 that can be performed by digital assistant system 700. The plurality of candidate policy actions determined by policy decision processing module 770 can represent policy actions that are most likely to achieve the greatest cumulative reward for the entire dialogue. In this way, policy decision processing module 770 need only select from a small subset of all possible policy actions, which can enable a more efficient and accurate selection process.

Returning to the example of FIG. 8, belief state 800 represents a plurality of candidate user intents. A first candidate user intent includes creating a calendar event for the day of the 25^{th} (e.g., represented by dialogue slots 802, 804, 806, 808, and 814 and terminal node 820). A second candidate user intent includes creating a calendar event for the day of the 23^{rd} and for a duration of two days (e.g., represented by dialogue slots 802, 804, 806, 808, 812, and 814 and terminal nodes 816 and 818). Other candidate user intents include searching for similar calendar events (on day of 25^{th} or on day of 23^{rd} for duration of two days). In the present example, policy decision processing module 770 can map belief state 800 to a plurality of candidate policy actions that would satisfy the plurality of candidate user intents. For example, a first candidate policy action of the plurality of candidate policy actions can include prompting the user for additional information to disambiguate among the candidate user intents (e.g., "Which day did you wanted to create the calendar meeting?"). Additionally, a second candidate policy action of the plurality of candidate policy actions can include confirming with the user whether he or she would like to create a calendar event (e.g., "Do you want to create a calendar event for the 25^{th}?"). Other non-limiting examples of candidate policy actions include offering to perform a specific action (e.g., "Shall I schedule a meeting on the 25^{th}?"), reporting the performance of an action (e.g., "OK, I've scheduled a meeting on the 25^{th}."), providing a summary of results from performing an action (e.g., "I've found one meeting in your calendar on the 25^{th}."), or providing instructions to the user on how to better operate the digital assistant user dialogue input (e.g., "When creating a calendar event, you can also specify the names of the attendees.").

Policy models 772 are configured to receive, as input, the belief state and provide a plurality of corresponding candidate policy actions. In some examples, policy models 772 include a set of predefined deterministic rules for determining the plurality of candidate policy actions given the belief state. In some examples, policy models 772 include stochastic models for determining probability distributions over candidate policy actions. In some examples, policy models 772 include one or more machine learning mechanisms (e.g., neural networks). Specifically, in some examples, policy models 772 are constructed using POMDPs.

According to the invention claimed, an embodiment of the policy decision processing module 770 determines which policy action of the plurality of candidate policy actions should be performed. Specifically, based on the belief state, policy decision processing module 770 selects a suitable policy action from the plurality of candidate policy actions to be performed by the device. In some examples, policy decision processing module 770 determines, using policy models 772, a probability distribution over the plurality of candidate policy actions. In some examples, policy decision processing module 770 selects the policy action having the highest probability value among the plurality of candidate policy actions. In some examples, policy decision processing module 770 applies reinforcement learning techniques to select the policy action to perform. In examples where policy decision processing module 770 utilizes POMDPs, a policy action is selected from the set of candidate actions by solving the POMDPs. Specifically, policy decision processing module 770 applies, using policy models 772, a reward function (e.g. Q-function for Q-learning) to each candidate policy action and the policy action that is predicted to maximize the reward function (e.g., the total reward over the entire dialogue) is selected.

In some examples, policy models 772 include a set of parameter values. The parameter values can also be referred to as weights. The parameter values are used to map the belief state to the plurality of candidate policy actions. In addition, the parameter values of policy models 772 are used to select a suitable policy action from the plurality of candidate policy actions.

Policy decision processing module 770 provides the selected policy action to task flow processing module 736 to execute. The selected policy action represents a set of one or more actions and the steps that the digital assistant performs to achieve the corresponding predicted user intent. Task flow processing module 736 is configured to receive the selected policy action from policy decision processing module 770 and perform the set of one or more actions represented by the selected policy action. In some examples, the set of one or more actions corresponding to the selected policy action is determined from task flow models 754. In some examples, task flow models 754 include procedures for obtaining additional information from the user or procedures for performing actions represented by the selected policy model. In some examples, the set of one or more actions represented by the selected policy action includes generating and outputting dialogue that is responsive to the user utterance. In these examples, task flow processing module 736 invokes dialogue flow processing module 734 to generate and output the appropriate dialogue.

For example, referring back to FIG. 8, the selected policy action for belief state 800 can represent the action of prompting the user for additional information to disambiguate the user intent. In this example, task flow processing module 736 performs a series of actions that includes generating (e.g., in conjunction with dialogue flow processing module 734) the output dialogue "Did you want your meeting to be scheduled on the 25^{th}?" and outputting a spoken representation of the output dialogue to the user.

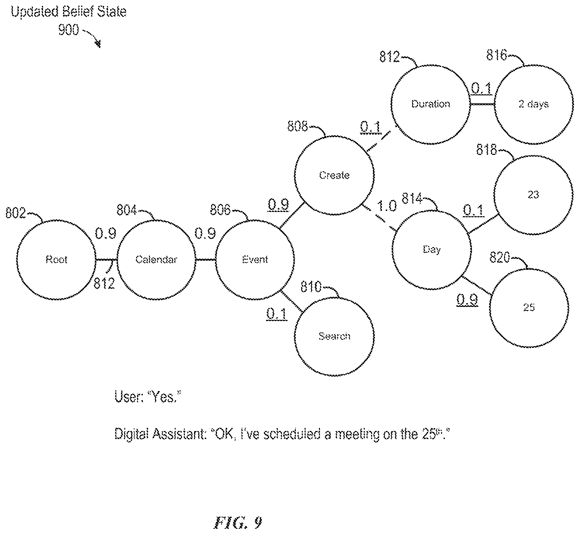

It should be recognized that digital assistant system 700 can receive and process subsequent user utterances in subsequent turns of the same dialogue. For each subsequent user utterance, an updated belief state is determined by belief tracker processing module 766 and a respective policy action is selected by policy decision processing module 770. For instance, continuing with the above example, if performing the selected policy action for belief state 800 includes outputting the dialogue prompt "Did you want your meeting to be scheduled on the 25^{th}?" digital assistant system 700 can subsequently receive a second user utterance that is responsive to the dialogue prompt. Specifically, with reference to FIG. 9, the second user utterance can be "Yes." Digital assistant system 700 can process the second user utterance in a similar manner as described above. In particular, STT processing module 730 can determine one or more second candidate text representations for the second user utterance and natural language processing module 732 can determine one or more second candidate user intents from the one or more second candidate text representations.

Based on the one or more second candidate user intents, belief tracker processing module 766 can determine updated belief state 900. Updated belief state is determined based on belief state 800. In particular, information obtained from previous user utterances of the same dialogue is retained in respective dialogue slots of the updated belief state. For instance, in this example, updated belief state 900 includes all of the dialogue slots of belief state 800. The dialogue slots of updated belief state 900 thus represent the same concepts and properties as corresponding dialogue slots of belief state 800. In addition, updated belief state 900 includes additional information based on observations for the second user utterance. Specifically, the marginal certainties and/or joint certainties (e.g., underlined in FIG. 9) of relevant dialogue slots are updated based on observations for the second user utterance. In the present example, because the second user utterance "Yes" confirms that the user's actual goal is to create a calendar event for the day of the 25^{th}, the marginal and joint certainties of dialogue slots that coincide with this goal are increased. Conversely, the marginal and joint certainties of dialogue slots that do not coincide with this goal are decreased. For example, the marginal certainty of dialogue slot 808 (representing the "create event" actionable intent) is increased whereas the marginal certainties of dialogue slot 810 (representing the "search event" actionable intent) and 812 (representing the "duration" property) are decreased. Additionally, the certainties included in dialogue slot 808 are updated based on the observations for the second user utterance. Specifically, the certainty for the first interpretation ("day" = 25) is increased whereas and the joint certainty for the second interpretation ("duration" = 2 and "day" = 23) is decreased.

Although in the present example updated belief state 900 maintains all of the dialogue slots of belief state 800, it should be recognized that, in other examples, only some of the dialogue slots of belief state 800 are maintained in updated belief state 900. For example, one or more dialogue slots of belief state 800 can be found to be irrelevant based on the current state of the dialogue and thus those one or more dialogue slots can be pruned from updated belief state 900.

Based on updated belief state 900, policy decision processing module 770 determines a second plurality of corresponding candidate policy actions and selects a second policy action from the second plurality of corresponding candidate policy actions. The selected second policy action is then executed by task flow processing module 736. In the present example, as shown in FIG. 9, executing the second policy action can include creating a calendar event on the day of the 25^{th} and outputting the dialogue "OK, I've scheduled a meeting on the 25^{th}."

### 4. Process for operating a digital assistant using hierarchical belief states

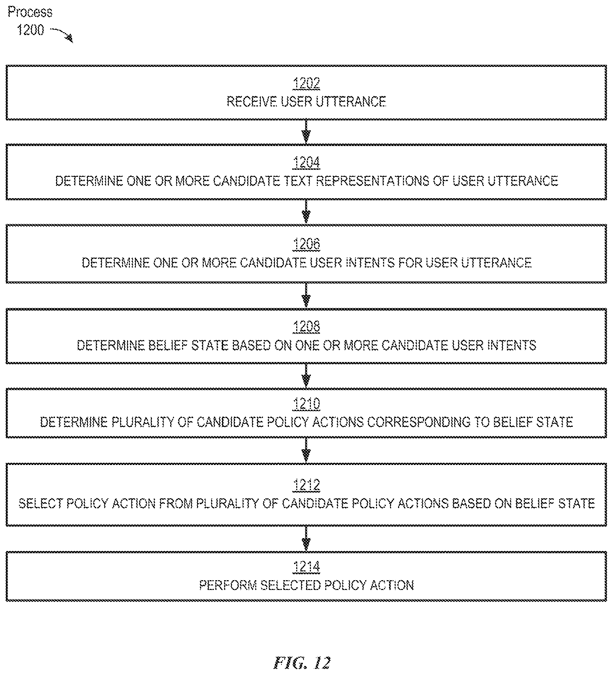

FIG. 12 illustrates process 1200 for operating a digital assistant using hierarchical belief states, according to the invention claimed. Process 1200 is described with reference to FIGS. 8-12. Process 1200 is performed, for example, using one or more electronic devices implementing a digital assistant. In some examples, process 1200 is performed using a client-server system (e.g., system 100), and the blocks of process 1200 are divided up in any manner between the server (e.g., DA server 106) and a client device. In other examples, the blocks of process 1200 are divided up between the server and multiple client devices (e.g., a mobile phone and a smart watch). Thus, while portions of process 1200 are described herein as being performed by particular devices of a client-server system, it will be appreciated that process 1200 is not so limited. In other examples, process 1200 is performed using only a client device (e.g., user device 104) or only multiple client devices. In process 1200, some blocks are, optionally, combined, the order of some blocks is, optionally, changed, and some blocks are, optionally, omitted. In some examples, additional steps can be performed in combination with process 1200.

At block 1202, a user utterance of a dialogue is received (e.g., at I/O processing module 728 and via microphone 213). The user utterance can include speech in unstructured natural language form. In some examples, the user utterance is one turn of a multi-tum dialogue conversation between the user and the digital assistant system (e.g., digital assistant system 700). The user utterance represents at least a portion of a user request for the digital assistant device to perform one or more tasks. In some examples, the user utterance is a response to a prompt or query from the digital assistant. For example, the digital assistant system can provide the prompt "When would you like to schedule your meeting?" In this example, the user utterance can be "3pm," which is responsive to the prompt. In the present example described with reference to FIG. 8, the user utterance is "I want a meeting for two days from the 23^{rd}."

At block 1204, one or more candidate text representations of the received user utterance are determined. The one or more candidate text representations are determined by performing speech recognition on the user utterance (e.g., using STT processing module 730). Each candidate text representation is a textual interpretation of the user utterance and has an associated speech recognition confidence score. In the present example, the determined one or more candidate text representations can include the candidate text representation "I want a meeting for two days from the 23^{rd}." It should be recognized that, in other examples, additional candidate text representations can be determined. For example, a second candidate text representation "I want a meeting for today from the 23^{rd}" can be determined for the user utterance.

At block 1206, one or more candidate user intents corresponding to the user utterance are determined based on the one or more text representations of block 1204. An associated intent confidence score is also determined for each candidate user intent. The one or more candidate user intents are determined by performing natural language processing (e.g., using natural language processing module 732 and ontology 760) on the one or more candidate text representations of block 1204. For example, the one or more candidate text representations are parsed to identify one or more relevant concepts (e.g., domains, super-domains, or actionable intents) and/or one or more relevant properties of an ontology. In some examples, each determined candidate user intent includes a candidate domain (and/or candidate super-domain) and one or more candidate parse interpretations. The candidate parse interpretations are based on relevant portions of the one or more candidate text representations and include possible values for the one or more identified concepts and/or properties.

In the present example, the candidate text representation "I want a meeting for two days from the 23^{rd}" can be parsed at block 1206 to identify the "calendar" candidate super-domain and two candidate actionable intents: "create event" and "search event." In addition, two candidate parse interpretations are determined for the phrase "two days from the 23^{rd}." One candidate interpretation can include the "day" property for the calendar event having a value of "25." A second candidate interpretation can include the "duration" and "day" properties for the candidate event having the values "2" and "23," respectively.

In some examples, determining the one or more candidate user intents further includes identifying, from the one or more text representations, a joint relationship between a first concept or property and a second concept or property. For instance, in the present example, the "duration" property and the "day" property for the second candidate interpretation can be determined to have a joint relationship.

At block 1208, a belief state for the dialogue is determined (e.g., using belief tracker processing module 766 and/or belief models 768). The belief state is an internal representation of the one or more candidate user intents that correspond to the dialogue. The belief state includes a plurality of dialogue slots that are arranged in a hierarchical structure. A subset of the plurality of dialogue slots can represent a respective candidate user intent of the one or more candidate user intents. In some examples, the plurality of dialogue slots of the belief state correspond to respective nodes of an ontology (e.g., ontology 760). In addition, the hierarchical arrangement of the plurality of dialogue slots is identical or substantially identical to the hierarchical arrangement of the respective nodes of the ontology.

The belief state is determined based on the one or more candidate user intents of block 1206. In particular, the belief state is constructed based on the determined candidate domains and candidate parse interpretations for the one or more candidate text representations. Each dialogue slot of the belief state represents a respective concept (e.g., domain, super-domain, or actionable intent) or property (e.g., property of a domain or actionable intent). In some examples, context data inferred by the digital assistant system can be used to determine the belief state. In some examples, the belief state is determined using a previous belief state corresponding to one or more previous user utterances of the dialogue received prior to the user utterance of block 1202.

Each dialogue slot of the belief state includes a respective marginal certainty for a concept or property represented by the respective dialogue slot. Marginal certainty can also be referred to as marginal probability, marginal likelihood, or marginal expectation. The marginal certainty for a concept or property represented by a respective dialogue slot is the likelihood that the concept or property is correct given the observations for the dialogue. In some examples, one or more dialogue slots of the belief state include a certainty distribution (e.g., probability distribution) over the possible values for a concept or property represented by the respective dialogue slot. In some examples, the possible values for the concept or property are obtained from the one or more candidate text representations. For example, a first possible value includes one or more words of a first candidate text representation of the one or more candidate text representations and a second possible value includes one or more words of a second candidate text representation of the one or more candidate text representations.

In the present example, with reference to FIG. 8, belief state 800 is determined from one or more candidate user intents corresponding to the candidate text representation "I want a meeting for two days from the 23^{rd}." In this example, dialogue slot 804 represents the "calendar" super-domain, dialogue slots 806, 808, and 810 represent the "create event" and "search event" actionable intents, and dialogue slots 812 and 814 represent the "duration" and "day" properties, respectively. Each dialogue slot of belief state 800 includes a respective marginal certainty. For example, dialogue slots 812 and 814 include the marginal certainties 0.5 and 1, respectively, which are the likelihoods that the respective properties ("duration" and "day") are the correct properties for the "create event" actionable intent given the observations for the dialogue. Dialogue slot 814 also includes a certainty distribution over the possible values for the "day" property. In this example, the possible values taken by the "day" property include "23" and "25" (represented by terminal nodes 818 and 820) and the certainty for each of the possible values is 0.5. The possible values taken by the "day" property are determined from parse interpretations of the phrase "two days from the 23^{rd}."

In some examples, one or more dialogue slots of the belief state further include one or more joint certainties for one or more interpretations arising from the respective dialogue slot. In some examples, the joint certainties are included only for dialogue slots representing concepts or properties that interact in a joint manner. For instance, in the present example, an interpretation (also referred to as "hypothesis") for the phrase "two days from the 23^{rd}" can be that the created calendar event includes both "duration" and "day" properties. In this interpretation, the "duration" and "day" properties have a joint relationship and thus a joint certainty for this interpretation is included in dialogue slot 808. The joint certainty of dialogue slot 808 is thus with respect to the "duration" and "day" properties represented by dialogue slots 812 and 814. Notably, the joint certainty is for joint properties represented by dialogue slots that independently descend from a common dialogue slot and not from each other (e.g., dialogue slots 812 and 814 directly descend from dialogue slot 808 and not from each other). In addition, the joint certainty is included in dialogue slot 808, which is closest to dialogue slots 812 and 814 where the joint relationship exists. The joint certainty thus does not include concepts or properties represented by dialogue slots 802, 804, or 806, which are ancestors of dialogue slot 808 and are not directly linked to dialogue slots 812 and 814. Although in the present example, the joint certainty of dialogue slot 808 is for properties that interact in a joint manner, it should be recognized that, in other examples, a dialogue slot of the belief state can include a joint certainty for concepts that interact in a joint manner.

Maintaining the joint certainty at the dialogue slot where the joint relationship exists can be desirable for enabling more efficient computation of belief states and policy actions. For example, rather than maintaining a joint certainty at the root level for the candidate user intent of creating a calendar event having both the "duration" and "day" properties (e.g., represented by dialogue slots 802, 804, 806, 808, 812, and 814), process 1100 maintains a joint certainty at dialogue slot 808 for the candidate interpretation of having both the "duration" and "day" properties for the "create" concept (e.g., represented by only dialogue slots 808, 812, and 814). In this way, the joint relationship between the "duration" and "day" properties can be encoded in belief state 800 without convoluting the relationship with additional higher level concepts (e.g., "calendar" and "event"). This can simplify the generation and tracking of the belief state and enable more efficient disambiguation and policy action determination.

Including both marginal certainties for each dialogue slot as well as joint certainties for groups of related dialogue slots in the belief state can also enable accurate and robust selection of policy actions while maintaining tractability and computational efficiency. In particular, this approach avoids having to maintain a comprehensive list of candidate user intents and their associated certainties, which reduces the size of the belief state and enables computation of the belief state and the policy action to be more tractable. At the same time, the joint certainty information contained in the belief state for concepts or properties that interact in a joint manner can better inform the selection of appropriate policy actions. As a result, the operability of the electronic device can be enhanced by allowing for better interpretation of speech and other forms of natural language input. Specifically, the electronic device can be able to operate with greater accuracy and reliability while maintaining tractability and computational efficiency when identifying and performing tasks in response to user requests.

In some examples, block 1208 includes resolving at least a portion of the belief state. The resolving can be performed prior to block 1210, for example. The resolving can include performing one or more operations (e.g., using task flow processing module 736 in conjunction with belief tracker processing module 766) to obtain one or more possible values for a concept or property represented by a dialogue slot of the belief state. For instance, in the present example, the phrase "two days from the 23^{rd}" can be interpreted to provide a value for the "day" properties. In this example, the interpretation of the phrase can be resolved by performing the calculation "23 + 2" to obtain the possible value "25" for the "day" property. The possible value "25" can then be included in terminal node 820 as a possible value for the "day" property represented by dialogue slot 814.

In another example, the user utterance can be "I want a meeting starting after my meeting with Bill." In this example, the corresponding belief state generated includes dialogue slots representing the candidate user intent of creating a calendar event. In particular, the belief state can include a dialogue slot representing the "start time" property for creating a calendar event. In this example, the phrase "after my meeting with Bill" is interpreted to provide a value for the "start time" property. Specifically, one or more dialogue slots of the belief state initially define operations to be performed to resolve the value for the "start time" property. The operations include, for example, searching for the end time of a calendar event related to "Bill" and determining one or more possible start times occurring after the end time of the calendar event related to "Bill." The one or more dialogue slots can be resolved by performing the operations represented by the one or more dialogue slots. The one or more possible start times determined from performing the operations can then be included in terminal nodes or dialogue slots as possible values for the "start time" property.

At block 1210, a plurality of candidate policy actions that correspond to the belief state are determined (e.g., using policy decision processing module 770 and/or policy models 772). For example, a policy model (e.g., policy models 772) maps the belief state to the plurality of candidate policy actions. In some examples, the policy model uses the marginal certainties and/or the one or more joint certainties of the dialogue slots in the belief state to determine the plurality of candidate policy actions. In addition, in some examples, the certainty distributions of dialogue slots in the belief state are also used to determine the plurality of candidate policy actions. In some examples, the plurality of candidate policy actions are selected from a larger population of predetermined policy actions based on the belief state. The plurality of candidate policy actions are policy actions that, when performed, would satisfy a candidate user intent of the one or more candidate user intents represented by the belief state. In some examples, the policy model has a set of current parameter values. The parameter values can be referred to as weights. The set of current parameter values is used to map the belief state to the plurality of candidate policy actions.

At block 1212, a policy action is selected (e.g., using policy decision processing module 770 and/or policy models 772) from the plurality of candidate policy actions of block 1210. For example, the policy action is selected based on the belief state of block 1208 and a policy model (e.g., policy models 772). In some examples, the policy action is selected based on the marginal certainty of each dialogue slot in the belief state and/or the one or more joint certainties of one or more dialogue slots in the belief state. The selected policy action corresponds to a candidate user intent of the one or more candidate user intents represented by the belief state. In some examples, the policy model is used to determine the probability distribution over the plurality of candidate policy actions of block 1210. For each candidate policy action, the probability distribution includes the probability that the respective candidate policy action is the correct policy action to perform given the belief state. In some examples, selecting the policy action at block 1212 includes selecting the policy action with the highest probability value among the plurality of candidate policy actions.

In some examples, reinforcement learning techniques are applied to select the policy action. In some examples, the belief state and the policy model are implemented using POMDPs. In these examples, the policy action is selected from the plurality of candidate policy actions by solving the POMDPs. Specifically, a reward function (e.g. a Q-function for Q-learning) is applied to each candidate policy action and the policy action that is predicted to maximize the reward function (e.g., the total reward over the entire dialogue) based on the belief state is selected.

At block 1214, the selected policy action of block 1212 is performed (e.g., using task flow processing module 736 and/or dialogue flow processing module 734). In some examples, performing the selected policy action includes outputting results of the policy action for presentation. The outputted results are responsive to the user utterance. In some examples, performing the selected policy action includes generating a suitable output dialogue and presenting the output dialogue to the user.

In some examples, the selected policy action includes providing a prompt that requests additional information regarding the one or more interpretations. Specifically, the prompt can be provided to disambiguate between candidate user intents corresponding to the one or more interpretations. For example, in the present example shown in FIG. 8, the policy action selected at block 1212 for belief state 800 includes providing the output dialogue "Did you want your meeting to be scheduled on the 25^{th}?" in response to the user utterance "I want a meeting for two days from the 23^{rd}." In this example, the output dialogue prompts the user for additional information to disambiguate between the two candidate interpretations of the phrase "two days from the 23^{rd}." In response to providing the output dialogue by performing the selected policy action at block 1214, the user can provide the second user utterance "Yes."

Blocks 1202-1214 can be repeated to process the second user utterance. In particular, the second user utterance is received (block 1202) and one or more second text representations of the second user utterance are determined (block 1204). One or more second candidate user intents are determined (block 1206) based on the one or more second text representations. The one or more second candidate user intents can indicate that the user wishes to create a calendar meeting for the day of the 25^{th} rather than for a duration of two days starting from the day of the 23^{rd}. An updated belief state is determined (block 1208) based on the one or more second candidate user intents. In particular, with reference to FIG. 9, updated belief state 900 is determined from belief state 800 based on the one or more second candidate user intents. Specifically, the marginal certainties of each dialogue slot and the joint certainty of dialogue slot 808 are updated based on the one or more second candidate user intents. For example, the marginal certainty of dialogue slot 812 for the "duration" property and the joint certainty of dialogue slot 808 for the "duration" and "day" properties can be decreased based on the one or more second candidate user intents. Using updated belief state 900, a second plurality of candidate policy actions are determined (block 1210) and a second policy action is selected (block 1212) from the second plurality of candidate policy actions. The selected second policy action includes an action represented by the "calendar" super-domain. For example, the selected second policy action includes creating a calendar event for the day of the 25^{th} and providing a second output dialogue confirming the action. The selected second policy action is then performed (block 1214). For example, as shown in FIG. 9, process 1200 can create a calendar event for the day of the 25^{th} and provide the second output dialogue "OK, I've scheduled a meeting on the 25^{th}."

It should be recognized that any number of subsequent user utterances can be processed by repeating blocks 1202-1214. For each subsequent user utterance, process 1200 updates the belief state to track the current state of the dialogue. In this way, observations from previous user utterances are utilized to select suitable policy actions to perform in response to the subsequent user utterances.

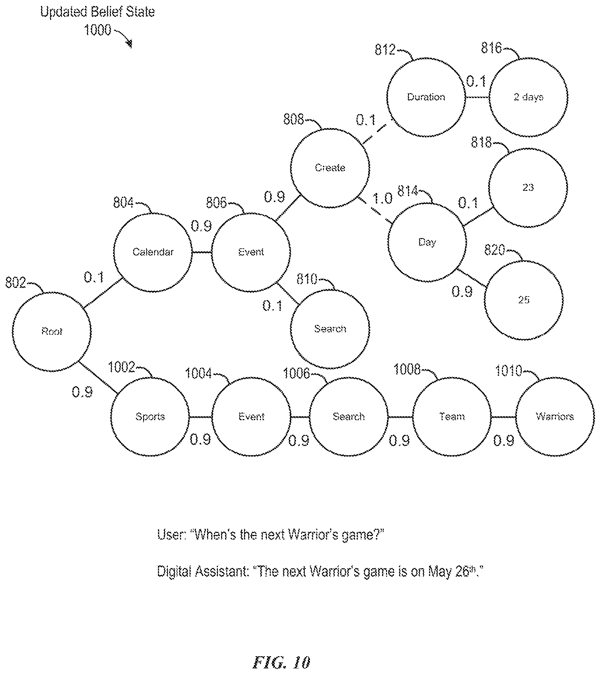

For instance, continuing with the present example, after the second policy action is performed, a third user utterance "When's the next Warrior's game" is received (block 1202). Notably, the third user utterance is unrelated to creating a calendar event. One or more third candidate text representations of the third user utterance are determined (block 1204) and one or more third candidate user intents are determined (block 1206) based on the one or more third text representations. An updated belief state is determined (block 1208) based on the one or more third candidate user intents. In particular, with reference to FIG. 10, updated belief state 1000 is determined from updated belief state 900 based on the one or more third candidate user intents. Updated belief state 1000 includes one or more of the dialogue slots of updated belief state 900. Specifically, updated belief state 1000 maintains dialogue slots 804, 806, 808, 810, 812, and 814 of updated belief state 900. In addition, updated belief state 1000 includes dialogue slots 1002, 1004, 1006, and 1008 and terminal node 1010 that are not included in updated belief state 900. Dialogue slots 1002, 1004, 1006, and 1008 are generated in updated belief state 1000 based on the concepts and properties of the one or more third candidate user intents. Specifically, dialogue slot 1002 represents the "sports" super-domain, dialogue slots 1004 and 1006 represent the "search event" actionable intent, and dialogue slot 1008 represents the "team" property. Terminal node 1010 represents a possible value for the "team" property. The concepts and properties represented by dialogue slots 1002, 1004, 1006, and 1008 can correspond to respective nodes of an ontology (e.g., ontology 760). Each of dialogue slots 1002, 1004, 1006, and 1008 includes a marginal certainty for the concept or property represented by the respective dialogue slot. In addition, the marginal certainties and joint certainties of dialogue slots 804, 806, 808, 810, 812, and 814 are updated based on observations for the third user utterance. Using updated belief state 1000, a third plurality of candidate policy actions are determined (block 1210) and a third policy action is selected (block 1212) from the third plurality of candidate policy actions. In this example, the selected third policy action includes an action represented by the "sports" super-domain. Specifically, the selected second policy action can include searching for sports events related to the "Warriors" sports team, identifying from the search results the date of the next Warriors game, and providing a third output dialogue with the day of the next Warriors game. The selected third policy action is then performed (block 1214). For example, process 1200 can determine that the next Warriors game is on the 26^{th} of May and provide the third output dialogue "The next Warrior's game is on May 26^{th}" (FIG. 10).

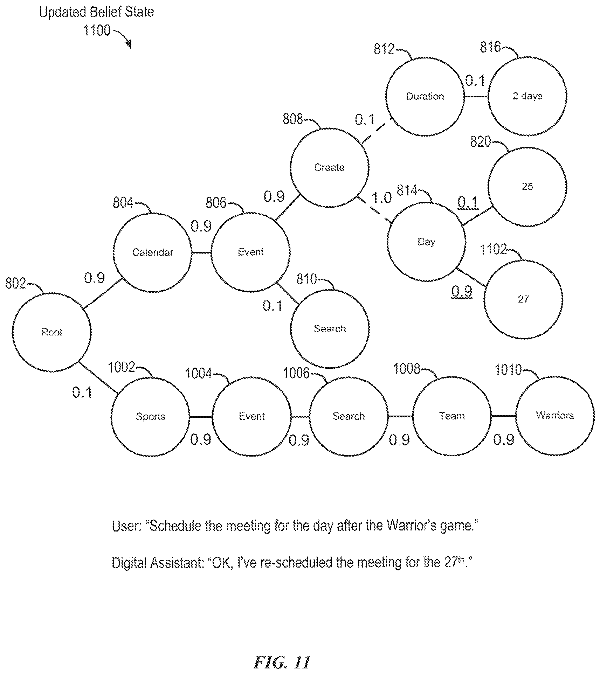

In some examples, a subsequent user utterance that refers to context from several prior turns in the dialogue conversation can be received. In these examples, process 1200 can leverage the state of the dialogue that is maintained in the belief state to interpret the subsequent user utterance. For example, a fourth user utterance "Schedule the meeting for the day after the Warrior's game" is received (block 1202). Notably this user utterance relates to information from the user utterance, the second user utterance, and the third user utterance. In this example, one or more fourth candidate text representations of the fourth user utterance are determined (block 1204) and one or more fourth candidate user intents are determined (block 1206) based on the one or more fourth text representations. An updated belief state is determined (block 1208) based on the one or more fourth candidate user intents. In particular, with reference to FIG. 11, updated belief state 1100 is determined from updated belief state 1000. Determining updated belief state 1100 includes updating the marginal certainties of each dialogue slot (and any joint certainty of relevant dialogue slot 808) based on the one or more fourth candidate user intents. For example, the marginal certainties of dialogue slots and terminal nodes representing the candidate user intent of creating a calendar event for the day of the 27^{th} can be updated accordingly. Specifically, as shown in FIG. 11, the marginal certainty for terminal node 1102 representing the possible value of "27" for the "day" property" can be increased, whereas the marginal certainty for terminal node 820 representing the possible value of "25" for the "day" property can be decreased. Using updated belief state 1100, a fourth plurality of candidate policy actions are determined (block 1210) and a fourth policy action is selected (block 1212) from the fourth plurality of candidate policy actions. In this example, the selected fourth policy action includes an action represented by the "calendar" super-domain. Specifically, the selected fourth policy action can include changing, in the calendar application of the electronic device, the "day" parameter of the previously created calendar event from the 25^{th} to the 27^{th} and providing a fourth output dialogue confirming the change. The selected fourth policy action is then performed (block 1214). For example, process 1200 can change the "day" parameter of the previously created calendar event in the calendar application from the 25^{th} to the 27^{th} and provide the fourth dialogue output "OK, I've re-scheduled the meeting for the 27^{th}" (FIG. 11).

The operations described above with reference to FIG. 12 are optionally implemented by components depicted in FIGS. 1-4, 6A-B, 7A-C, and 9. For example, the operations of process 1200 can be implemented by I/O processing module 728, STT processing module 730, natural language processing module 732, belief tracker processing module 766, belief models 768, policy decision processing module 770, and policy models 772. It would be clear to a person having ordinary skill in the art how other processes are implemented based on the components depicted in FIGS. 1-4, 6A-B, and 7A-C.

In accordance with some implementations, a computer-readable storage medium (e.g., a non-transitory computer-readable storage medium) is provided, the computer-readable storage medium storing one or more programs for execution by one or more processors of an electronic device, the one or more programs including instructions for performing any of the methods or processes described herein.

In accordance with some implementations, an electronic device (e.g., a portable electronic device) is provided that comprises means for performing any of the methods or processes described herein.

In accordance with some implementations, an electronic device (e.g., a portable electronic device) is provided that comprises a processing unit configured to perform any of the methods or processes described herein.

In accordance with some implementations, an electronic device (e.g., a portable electronic device) is provided that comprises one or more processors and memory storing one or more programs for execution by the one or more processors, the one or more programs including instructions for performing any of the methods or processes described herein.

The foregoing description, for purpose of explanation, has been described with reference to specific embodiments. However, the illustrative discussions above are not intended to be exhaustive or to limit the invention to the precise forms disclosed. Many modifications and variations are possible in view of the above teachings. The embodiments were chosen and described in order to best explain the principles of the techniques and their practical applications. Others skilled in the art are thereby enabled to best utilize the techniques and various embodiments with various modifications as are suited to the particular use in the scope of the appended claims.

Although the disclosure and examples have been fully described with reference to the accompanying drawings, it is to be noted that various changes and modifications will become apparent to those skilled in the art. Such changes and modifications are to be understood as being included within the scope of the claims

## Claims

1. A method for operating a digital assistant, the method comprising:
at an electronic device having one or more processors and memory:
receiving (1202) a user utterance of a dialogue;
determining 1206), based on one or more text representations of the user utterance, one or more user intents corresponding to the user utterance; the method being **characterised by** further comprising:
determining (1208) a belief state for the dialogue, the belief state comprising a plurality of dialogue slots, wherein each dialogue slot of the plurality of dialogue slots includes a respective marginal certainty for a concept or property represented by the respective dialogue slot, and wherein a first dialogue slot of the plurality of dialogue slots further includes one or more joint certainties for one or more interpretations arising from the first dialogue slot;
selecting (1212), based on the marginal certainty of each dialogue slot of the plurality of dialogue slots and the one or more joint certainties of the first dialogue slot, a policy action from a plurality of candidate policy actions that correspond to the belief state; and
performing (1214) the selected policy action, including outputting results of the policy action for presentation.

2. The method of claim 1, wherein a first interpretation of the one or more interpretations is based on two or more dialogue slots of the plurality of dialogue slots, and the two or more dialogue slots are descendants of the first dialogue slot.

3. The method of claim 2, wherein each dialogue slot of the two or more dialogue slots is not a descendant of another dialogue slot of the two or more dialogue slots.

4. The method of any of claims 2-3, wherein the first interpretation includes a combination of a first concept or property and a second concept or property, the first concept or property represented by a first dialogue slot of the two or more dialogue slots and the second concept or property represented by a second dialogue slot of the two or more dialogue slots.

5. The method of any of claims 2-4, wherein determining one or more user intents includes identifying, from the one or more text representations, a first concept or property, a second concept or property, and a joint relationship between the first concept or property and the second concept or property, and wherein the first interpretation includes the first concept or property and the second concept or property.

6. The method of any of claims 1-5, wherein each interpretation of the one or more interpretations does not include a concept or property represented by a dialogue slot of the plurality of dialogue slots that is an ancestor of the first dialogue slot.

7. The method of any of claims 1-6, wherein the first dialogue slot is a descendant of one or more dialogue slots of the plurality of dialogue slots.

8. The method of any of claims 1-7, wherein performing the policy action comprises providing a prompt requesting additional information regarding the one or more interpretations, and wherein the method further comprises:
receiving user input responsive to the prompt; and
updating the belief state, including updating the one or more joint certainties for the one or more interpretations based on the received user input.

9. The method of claims 1-8, wherein a second dialogue slot of the plurality of dialogue slots defines an operation for obtaining a value for a property.

10. The method of claim 9, further comprising:
prior to performing the selected policy action, performing the operation to obtain the value of the property; and
associating the obtained value of the property to the second dialogue slot of the plurality of dialogue slots, wherein the policy action is performed using the obtained value of the property.

11. The method of claims 1-10, wherein a third dialogue slot of the plurality of dialogue slots includes a probability distribution over a plurality of values for a concept or property represented by the third dialogue slot.

12. The method of claim 11, wherein a first value of the plurality of values includes one or more words of a first text representation of the one or more text representations, and wherein a second value of the plurality of values includes one or more words of a second text representation of the one or more text representations.

13. The method of any of claims 1-12, wherein the plurality of dialogue slots are arranged in a hierarchical structure.

14. The method of any of claims 1-13, wherein the one or more user intents are determined using an ontology and the belief state is determined using the ontology.

15. The method of claim 14, wherein the plurality of dialogue slots have a hierarchical arrangement that is identical to a hierarchical arrangement of a plurality of corresponding nodes of the ontology.

16. The method of any of claims 1-15, wherein the belief state is determined using a previous belief state corresponding to one or more previous user utterances of the dialogue, the one or more previous user utterances received prior to the user utterance.

17. The method of any of claims 1-16, further comprising:
receiving a second user utterance of the dialogue;
in response to receiving the second user utterance:
determining, based on the second user utterance and the belief state, an updated belief state for the dialogue, wherein the updated belief state includes one or more dialogue slots representing a first domain of an ontology, and wherein the belief state does not include any dialogue slot representing the first domain;
selecting a second policy action from a second plurality of candidate policy actions that correspond to the updated belief state, wherein the second policy action includes an action represented by the first domain; and
performing the selected second policy action, including outputting results of the second policy action for presentation.

18. The method of claim 17, wherein the updated belief state includes the plurality of dialogue slots of the belief state.

19. The method of any of claims 17-18, further comprising:
receiving a third user utterance of the dialogue;
determining, based on the third user utterance and the updated belief state, a second updated belief state for the dialogue;
selecting a third policy action from a third plurality of candidate policy actions that correspond to the second updated belief state, wherein the policy action and the third policy action each include an action represented by a second domain of the ontology; and
performing the selected third policy action, wherein performing the selected policy action includes setting a parameter of an application of the device to a first value, and wherein performing the selected third policy action includes changing the parameter of the application from the first value to a second value.

20. A computer-readable storage medium storing one or more programs configured to be executed by one or more processors of an electronic device, the one or more programs including instructions for performing the methods of any one of claims 1-19.

21. An electronic device, comprising:
one or more processors; and
memory storing one or more programs configured to be executed by the one or more processors, the one or more programs including instructions for performing the methods of any one of claims 1-19.

## Patentansprüche

1. Verfahren zum Betreiben eines digitalen Assistenten, welches Verfahren umfasst:
an einer elektronischen Vorrichtung mit einem oder mehreren Prozessoren und einem Speicher:
das Empfangen (1202) einer Benutzeräußerung eines Dialogs;
das Bestimmen (1206) einer oder mehrerer Benutzerabsichten entsprechend der Benutzeräußerung basierend auf einer oder mehreren Textdarstellungen der Benutzeräußerung; welches Verfahren **dadurch gekennzeichnet ist,**
**dass** es ferner umfasst:
das Bestimmen (1208) eines Glaubenszustands für den Dialog, wobei der Glaubenszustand eine Vielzahl von Dialogslots umfasst, wobei jeder Dialogslot der Vielzahl von Dialogslots eine jeweilige marginale Gewissheit für ein Konzept oder eine Eigenschaft dargestellt durch den jeweiligen Dialogslot beinhaltet, und wobei ein erster Dialogslot der Vielzahl von Dialogslots ferner eine oder mehrere gemeinsame Gewissheiten für eine oder mehrere Interpretationen, die sich aus dem ersten Dialogslot ergeben, beinhaltet;
das Auswählen (1212) einer Richtlinienaktion aus einer Vielzahl von Kandidatenrichtlinienaktionen, die dem Glaubenszustand entsprechen, basierend auf der marginalen Gewissheit jedes Dialogslots der Vielzahl von Dialogslots und
der einen oder den mehreren gemeinsamen Gewissheiten des ersten Dialogslots; und
das Durchführen (1214) der ausgewählten Richtlinienaktion, einschließlich des Ausgebens von Ergebnissen der Richtlinienaktion zur Darstellung.

2. Verfahren nach Anspruch 1, wobei eine erste Interpretation der einen oder mehreren Interpretationen auf zwei oder mehreren Dialogslots der Vielzahl von Dialogslots basiert, und die beiden oder mehreren Dialogslots Abkömmlinge des ersten Dialogslots sind.

3. Verfahren nach Anspruch 2, wobei jeder Dialogslot der beiden oder mehreren Dialogslots kein Abkömmling eines anderen Dialogslots der beiden oder mehreren Dialogslots ist.

4. Verfahren nach einem der Ansprüche 2 bis 3, wobei die erste Interpretation eine Kombination eines ersten Konzepts oder einer ersten Eigenschaft und eines zweiten Konzepts oder einer zweiten Eigenschaft beinhaltet, wobei das erste Konzept oder die erste Eigenschaft durch einen ersten Dialogslot der beiden oder mehreren Dialogslots dargestellt sind und das zweite Konzept oder die zweite Eigenschaft durch einen zweiten Dialogslot der beiden oder mehreren Dialogslots dargestellt sind.

5. Verfahren nach einem der Ansprüche 2 bis 4, wobei das Bestimmen einer oder mehrerer Benutzerabsichten das Identifizieren, aus der einen oder den mehreren Textdarstellungen, eines ersten Konzepts oder einer ersten Eigenschaft, eines zweiten Konzepts oder einer zweiten Eigenschaft und eines gemeinsamen Verhältnisses zwischen dem ersten Konzept oder der ersten Eigenschaft und dem zweiten Konzept oder der zweiten Eigenschaft beinhaltet, und wobei die erste Interpretation das erste Konzept oder die erste Eigenschaft und das zweite Konzept oder die zweite Eigenschaft beinhaltet.

6. Verfahren nach einem der Ansprüche 1 bis 5, wobei jede Interpretation der einen oder mehreren Interpretationen kein Konzept oder keine Eigenschaft dargestellt durch einen Dialogslot der Vielzahl von Dialogslots, der ein Vorfahr des ersten Dialogslots ist, beinhaltet.

7. Verfahren nach einem der Ansprüche 1 bis 6, wobei der erste Dialogslot ein Abkömmling eines oder mehrerer Dialogslots der Vielzahl von Dialogslots ist.

8. Verfahren nach einem der Ansprüche 1 bis 7, wobei das Durchführen der Richtlinienaktion das Bereitstellen einer Prompt-Aufforderungs-Zusatzinformation bezüglich der einen oder mehreren Interpretationen umfasst, und wobei das Verfahren ferner umfasst:
das Empfangen einer Benutzereingabe als Reaktion auf den Prompt; und
das Aktualisieren des Glaubenszustandes, einschließlich des Aktualisierens der einen oder mehreren gemeinsamen Gewissheiten für die eine oder mehreren Interpretationen basierend auf der empfangenen Benutzereingabe.

9. Verfahren nach den Ansprüchen 1 bis 8, wobei ein zweiter Dialogslot der Vielzahl von Dialogslots eine Tätigkeit definiert, um einen Wert für eine Eigenschaft zu erhalten.

10. Verfahren nach Anspruch 9, ferner umfassend:
vordem Durchführen der ausgewählten Richtlinienaktion, das Durchführen der Tätigkeit, um den Wert der Eigenschaft zu erhalten; und
das Zuordnen des erhaltenen Wertes der Eigenschaft zum zweiten Dialogslot der Vielzahl von Dialogslots, wobei die Richtlinienaktion durch die Verwendung des erhaltenen Wertes der Eigenschaft durchgeführt wird.

11. Verfahren nach den Ansprüchen 1 bis 10, wobei ein dritter Dialogslot der Vielzahl von Dialogslots eine Wahrscheinlichkeitsverteilung über eine Vielzahl von Werten für ein Konzept oder eine Eigenschaft dargestellt durch den dritten Dialogslot beinhaltet.

12. Verfahren nach Anspruch 11, wobei ein erster Wert der Vielzahl von Werten ein oder mehrere Wörter einer ersten Textdarstellung der einen oder mehreren Textdarstellungen beinhaltet, und wobei ein zweiter Wert der Vielzahl von Werten ein oder mehrere Wörter einer zweiten Textdarstellung der einen oder mehreren Textdarstellungen beinhaltet.

13. Verfahren nach einem der Ansprüche 1 bis 12, wobei die Vielzahl von Dialogslots in einer hierarchischen Struktur angeordnet ist.

14. Verfahren nach einem der Ansprüche 1 bis 13, wobei die eine oder mehreren Benutzerabsichten durch die Verwendung einer Ontologie bestimmt werden und der Glaubenszustand durch die Verwendung der Ontologie bestimmt wird.

15. Verfahren nach Anspruch 14, wobei die Vielzahl von Dialogslots eine hierarchische Anordnung aufweist, die mit einer hierarchischen Anordnung einer Vielzahl von entsprechenden Knoten der Ontologie identisch ist.

16. Verfahren nach einem der Ansprüche 1 bis 15, wobei der Glaubenszustand durch die Verwendung eines vorherigen Glaubenszustandes entsprechend einer oder mehreren vorherigen Benutzeräußerungen des Dialogs bestimmt wird, wobei die eine oder mehreren vorherigen Benutzeräußerungen vor der Benutzeräußerung empfangen werden.

17. Verfahren nach einem der Ansprüche 1 bis 16, ferner umfassend:
das Empfangen einer zweiten Benutzeräußerung des Dialogs;
als Reaktion auf das Empfangen der zweiten Benutzeräußerung:
das Bestimmen eines aktualisierten Glaubenszustandes für den Dialog basierend auf der zweiten Benutzeräußerung und dem Glaubenszustand, wobei der aktualisierte Glaubenszustand einen oder mehrere Dialogslots, die eine erste Domäne einer Ontologie darstellen, beinhaltet, und wobei der Glaubenszustand keinen Dialogslot, der die erste Domäne darstellt, beinhaltet;
das Auswählen einer zweiten Richtlinienaktion aus einer zweiten Vielzahl von Kandidatenrichtlinienaktionen, die dem aktualisierten Glaubenszustand entsprechen, wobei die zweite Richtlinienaktion eine durch die erste Domäne dargestellte Aktion beinhaltet; und
das Durchführen der ausgewählten zweiten Richtlinienaktion, einschließlich des Ausgebens von Ergebnissen der zweiten Richtlinienaktion zur Darstellung.

18. Verfahren nach Anspruch 17, wobei der aktualisierte Glaubenszustand die Vielzahl von Dialogslots des Glaubenszustandes beinhaltet.

19. Verfahren nach einem der Ansprüche 17 bis 18, ferner umfassend:
das Empfangen einer dritten Benutzeräußerung des Dialogs;
das Bestimmen eines zweiten aktualisierten Glaubenszustandes für den Dialog basierend auf der dritten Benutzeräußerung und dem aktualisierten Glaubenszustand;
das Auswählen einer dritten Richtlinienaktion aus einer dritten Vielzahl von Kandidatenrichtlinienaktionen, die dem zweiten aktualisierten Glaubenszustand entsprechen, wobei die Richtlinienaktion und die dritte Richtlinienaktion jeweils eine durch eine zweite Domäne der Ontologie dargestellte Aktion beinhalten; und
das Durchführen der ausgewählten dritten Richtlinienaktion, wobei das Durchführen der ausgewählten Richtlinienaktion das Einstellen eines Parameters einer Applikation der Vorrichtung auf einen ersten Wert beinhaltet, und wobei das Durchführen der ausgewählten dritten Richtlinienaktion das Ändern des Parameters der Applikation von dem ersten Wert zu einem zweiten Wert beinhaltet.

20. Computerlesbares Speichermedium, das ein oder mehrere Programme speichert, die konfiguriert sind, um von einem oder mehreren Prozessoren einer elektronischen Vorrichtung ausgeführt zu werden, wobei das eine oder die mehreren Programme Anweisungen zur Durchführung der Verfahren nach einem der Ansprüche 1 bis 19 enthalten.

21. Elektronische Vorrichtung, umfassend:
einen oder mehrere Prozessoren; und
einen Speicher, der ein oder mehrere Programme speichert, die konfiguriert sind, um von dem einen oder den mehreren Prozessoren ausgeführt zu werden, wobei das eine oder die mehreren Programme Anweisungen zur Durchführung der Verfahren nach einem der Ansprüche 1 bis 19 enthalten.

## Revendications

1. Procédé pour faire fonctionner un assistant numérique, le procédé comprenant :
au niveau d'un dispositif électronique ayant un ou plusieurs processeurs et une mémoire :
la réception (1202) d'un énoncé d'utilisateur d'un dialogue ;
la détermination 1206), sur la base d'une ou de plusieurs représentations de texte de l'énoncé d'utilisateur, d'une ou de plusieurs intentions d'utilisateur correspondant à l'énoncé d'utilisateur ; le procédé étant **caractérisé en ce qu'**il comprend en outre :
la détermination (1208) d'un état de croyance pour le dialogue, l'état de croyance comprenant une pluralité de créneaux de dialogue, chaque créneau de dialogue de la pluralité de créneaux de dialogue comprenant une certitude marginale respective pour un concept ou une propriété représenté(e) par le créneau de dialogue respectif, et un premier créneau de dialogue de la pluralité de créneaux de dialogue comprenant en outre une ou plusieurs certitudes en commun pour une ou plusieurs interprétations issues du premier créneau de dialogue ;
la sélection (1212), sur la base de la certitude marginale de chaque créneau de dialogue de la pluralité de créneaux de dialogue et de la ou des certitudes en commun du premier créneau de dialogue, d'une action de stratégie parmi une pluralité d'actions de stratégie candidates qui correspondent à l'état de croyance ; et
la réalisation (1214) de l'action de stratégie sélectionnée, comprenant la sortie des résultats de l'action de stratégie pour la présentation.

2. Procédé de la revendication 1, dans lequel une première interprétation de la ou des interprétations est basée sur deux créneaux de dialogue ou plus de la pluralité de créneaux de dialogue, et les deux créneaux de dialogue ou plus sont des descendants du premier créneau de dialogue.

3. Procédé de la revendication 2, dans lequel chaque créneau de dialogue des deux créneaux de dialogue ou plus n'est pas un descendant d'un autre créneau de dialogue des deux créneaux de dialogue ou plus.

4. Procédé selon l'une quelconque des revendications 2 à 3, dans lequel la première interprétation comprend une combinaison d'un premier concept ou d'une première propriété et d'un deuxième concept ou d'une deuxième propriété, le premier concept ou la première propriété étant représenté(e) par un premier créneau de dialogue parmi les deux créneaux de dialogue ou plus et le deuxième concept ou la deuxième propriété représenté(e) par un deuxième créneau de dialogue des deux créneaux de dialogue ou plus.

5. Procédé selon l'une quelconque des revendications 2 à 4, dans lequel la détermination d'une ou de plusieurs intentions d'utilisateur comprend l'identification, à partir de la ou des représentations de texte, d'un premier concept ou d'une première propriété, d'un deuxième concept ou d'une deuxième propriété, et d'une relation en commun entre le premier concept ou la première propriété et le deuxième concept ou la deuxième propriété, et la première interprétation comprenant le premier concept ou la première propriété et le deuxième concept ou la deuxième propriété.

6. Procédé selon l'une quelconque des revendications 1 à 5, dans lequel chaque interprétation de la ou des interprétations ne comprend pas un concept ou une propriété représenté(e) par un créneau de dialogue de la pluralité de créneaux de dialogue qui est un ancêtre du premier créneau de dialogue.

7. Procédé selon l'une quelconque des revendications 1 à 6, dans lequel le premier créneau de dialogue est un descendant d'un ou plusieurs créneaux de dialogue de la pluralité de créneaux de dialogue.

8. Procédé selon l'une quelconque des revendications 1 à 7, dans lequel la réalisation de l'action de stratégie comprend la fourniture d'une invite demandant des informations supplémentaires concernant la ou les interprétations, et le procédé comprenant en outre :
la réception d'une entrée d'utilisateur en réponse à l'invite ; et
la mise à jour de l'état de croyance, comprenant la mise à jour de la ou des certitudes en commun pour la ou les interprétations sur la base de l'entrée d'utilisateur reçue.

9. Procédé selon les revendications 1 à 8, dans lequel un deuxième créneau de dialogue de la pluralité de créneaux de dialogue définit une opération pour obtenir une valeur pour une propriété.

10. Procédé selon la revendication 9, comprenant en outre :
avant d'effectuer l'action de stratégie sélectionnée, la réalisation de l'opération pour obtenir la valeur de la propriété ; et
l'association de la valeur obtenue de la propriété au deuxième créneau de dialogue de la pluralité de créneaux de dialogue, l'action de stratégie étant réalisée à l'aide de la valeur obtenue de la propriété.

11. Procédé selon les revendications 1 à 10, dans lequel un troisième créneau de dialogue de la pluralité de créneaux de dialogue comprend une distribution de probabilité sur une pluralité de valeurs pour un concept ou une propriété représenté(e) par le troisième créneau de dialogue.

12. Procédé de la revendication 11, dans lequel une première valeur de la pluralité de valeurs comprend un ou plusieurs mots d'une première représentation de texte de la ou des représentations de texte, et une deuxième valeur de la pluralité de valeurs comprenant un ou plusieurs mots d'une deuxième représentation de texte de la ou des représentations de texte.

13. Procédé selon l'une quelconque des revendications 1 à 12, dans lequel la pluralité de créneaux de dialogue sont agencés dans une structure hiérarchique.

14. Procédé selon l'une quelconque des revendications 1 à 13, dans lequel la ou les intentions d'utilisateur sont déterminées à l'aide d'une ontologie, et l'état de croyance est déterminé à l'aide de l'ontologie.

15. Procédé de la revendication 14, dans lequel la pluralité de créneaux de dialogue ont un agencement hiérarchique qui est identique à un agencement hiérarchique d'une pluralité de noeuds correspondants de l'ontologie.

16. Procédé selon l'une quelconque des revendications 1 à 15, dans lequel l'état de croyance est déterminé à l'aide d'un état de croyance précédent correspondant à un ou plusieurs énoncés d'utilisateur précédents du dialogue, le ou les énoncés d'utilisateur précédents étant reçus avant l'énoncé d'utilisateur.

17. Procédé selon l'une quelconque des revendications 1 à 16, comprenant en outre :
la réception d'un deuxième énoncé d'utilisateur d'un dialogue ;
en réponse à la réception du deuxième énoncé d'utilisateur :
la détermination, sur la base du deuxième énoncé d'utilisateur et de l'état de croyance, d'un état de croyance mis à jour pour le dialogue, l'état de croyance mis à jour comprenant un ou plusieurs créneaux de dialogue représentant un premier domaine d'une ontologie, et l'état de croyance ne comprenant aucun créneau de dialogue représentant le premier domaine ;
la sélection d'une deuxième action de stratégie parmi une deuxième pluralité d'actions de stratégie candidates qui correspondent à l'état de croyance mis à jour, la deuxième action de stratégie comprenant une action représentée par le premier domaine ; et
la réalisation de la deuxième action de stratégie sélectionnée, comprenant la sortie des résultats de la deuxième action de stratégie pour la présentation.

18. Procédé selon la revendication 17, dans lequel l'état de croyance mis à jour comprend la pluralité de créneaux de dialogue de l'état de croyance.

19. Procédé selon l'une quelconque des revendications 17 à 18, comprenant en outre :
la réception d'un troisième énoncé d'utilisateur du dialogue ;
la détermination, sur la base du troisième énoncé d'utilisateur et de l'état de croyance mis à jour, d'un deuxième état de croyance mis à jour pour le dialogue ;
la sélection d'une troisième action de stratégie parmi une troisième pluralité d'actions de stratégie candidates qui correspondent au deuxième état de croyance mis à jour, l'action de stratégie et la troisième action de stratégie comprenant chacune une action représentée par un deuxième domaine de l'ontologie ; et
la réalisation de la troisième action de stratégie sélectionnée, la réalisation de l'action de stratégie sélectionnée comprenant le réglage d'un paramètre d'une application du dispositif à une première valeur, et la réalisation de la troisième action de stratégie sélectionnée comprenant le changement du paramètre de l'application de la première valeur à une deuxième valeur.

20. Support de stockage lisible par ordinateur, stockant un ou plusieurs programmes configurés pour être exécutés par un ou plusieurs processeurs d'un dispositif électronique, le ou les programmes comprenant des instructions pour exécuter les procédés selon l'une quelconque des revendications 1 à 19.

21. Dispositif électronique, comprenant :
un ou plusieurs processeurs ; et
une mémoire stockant un ou plusieurs programmes configurés pour être exécutés par le ou les processeurs, le ou les programmes comprenant des instructions pour la mise en oeuvre du procédé selon l'un quelconque des revendications 1 à 19.
